# EUROPÄISCHE PATENTSCHRIFT

(11) **EP 2 659 639 B1**
(45) Veröffentlichungstag und Bekanntmachung des Hinweises auf die Patenterteilung: **21.08.2019**
(21) Anmeldenummer: 11787650.8
(22) Anmeldetag: 15.11.2011
(51) Int. Cl.: H04L 27/26, H04B 17/00

(54) **AUSWERTEEINHEIT UND VERFAHREN ZUR DEMODULATION VON OFDM-DATEN**
EVALUATION UNIT AND METHOD FOR DEMODULATING OFDM DATA
UNITÉ D'ÉVALUATION ET PROCÉDÉ DE DÉMODULATION DE DONNÉES OFDM

(30) Priorität: 27.12.2010 DE 102010056327; 01.04.2011 DE 102011006640
(43) Veröffentlichungstag der Anmeldung: 06.11.2013
(73) Patentinhaber: Rohde & Schwarz GmbH & Co. KG, 81671 München (DE)
(72) Erfinder: HIRSCHMANN, Susanne, 85221 Dachau (DE); WEISS, Martin, 83607 Holzkirchen (DE); FELDHAUS, Gregor, 81669 München (DE)
(74) Vertreter: Körfer, Thomas
(86) Internationale Anmeldenummer: PCT/EP2011/070125
(87) Internationale Veröffentlichungsnummer: WO 2012/089399

(56) Entgegenhaltungen:
- D. von Droste: "Measurement on Generic OFDM Signals", 18. Oktober 2000 (2000-10-18), Rohde und Schwarz, Germany, XP002671687, Seiten 1-22, Seite 6 Abbildung 1 Seite 3, Zeile 45 - Seite 4, Zeile 2 Seite 11 - Seite 12
- Rohde und Schwarz: "OFDM VSA PC Software", 10. Dezember 2009 (2009-12-10), Rohde und Schwarz, Germany, XP002671688, Seiten 1-111, Seite 22 Seite 38 Seite 62
- "Agilent 89650S Wideband Vector Signal Analyzer System with High Performance Spectrum Analysis Technical Overview", , 2 September 2008 (2008-09-02), pages 1-16, XP55141980, USA Retrieved from the Internet: URL:http://cp.literature.agilent.com/litwe b/pdf/5989-0871EN.pdf [retrieved on 2014-09-23]
- "Agilent 89650S Wideband Vector Signal Analyzer System with High Performance Spectrum Analysis Technical Overview", , 2 September 2008 (2008-09-02), pages 1-16, XP055141980, USA Retrieved from the Internet: URL:http://cp.literature.agilent.com/litwe b/pdf/5989-0871EN.pdf [retrieved on 2014-09-23]

## Beschreibung

Die Erfindung betrifft eine Auswerteeinheit, die zur Signalbeschreibung bei OFDM-Systemen (engl. orthogonal frequency division multiplex; dt. orthogonaler Frequenzmultiplex) dient, sowie ein Verfahren zum Betreiben dieser Auswerteeinheit.

Bei OFDM-Systemen werden die zu übertragenden Informationen auf eine Vielzahl von Unterträgern moduliert die orthogonal zueinander stehen. Die Entwicklung solcher OFDM-Systeme und der dazugehörigen Komponenten, sowohl auf der Senderseite, als auch auf der Empfängerseite ist relativ komplex. Um innerhalb des Entwicklungsprozesses möglichst früh Fehler feststellen zu können, ist es wünschenswert, dass das erzeugte und aufgezeichnete OFDM-Signal analysiert werden kann. Ein gängiges Messverfahren ist beispielsweise die Messung der EVM (engl. Error Vector Magnitude, dt. Betragsfehlervektor). Während des Entwicklungsprozesses ist es allerdings häufig so, dass das zu analysierende OFDM-Signal noch nicht standartkonform ist, bzw. es sich bei dem zu analysierenden OFDM-Signal um ein proprietäres Signal handelt, wodurch es den bereits vorhandenen Messmitteln nicht möglich ist, das OFDM-Signal wie gewünscht zu analysieren. Damit die vorhandenen Messmittel dennoch derartige OFDM-Signale auswerten können, muss das zu analysierende OFDM-Signal detailliert beschrieben werden, sodass dem Messmittel bekannt ist, an welchen Stellen innerhalb des OFDM-Signals beispielsweise Datensymbole oder Pilotsymbole vorliegen.

Auf dem 13. Internationalen OFDM-Workshop 2008 in Hamburg wurde diese Problematik von Herrn Dr. Gregor Feldhaus in seinem Vortrag mit dem Titel "Generic OFDM-Measurement Solution" angesprochen. In diesem Vortrag, der veröffentlicht ist in Proceedings of the 13th International OFDM-Workshop (InOWo'08), Hamburg 2008, wird vorgeschlagen, dass für jeden einzelnen Signalraumpunkt eines OFDM-Symbols eines zu analysierenden OFDM-Signals angegeben wird, ob der Signalraumpunkt ein Datensymbol, oder ein Pilotsymbol, oder ein Nullsymbol oder ein Dummysymbol darstellt und welche Modulation für den Signalraumpunkt verwendet wird. Nachteilig an der beschriebenen Lösung ist, dass eine solche Zuweisung von verschiedenen Signalraumpunkten zu den entsprechenden Symboltypen die Erstellung einer Software erfordert, die für jedes OFDM-Signal angepasst werden muss. In dem Vortrag wird vorgeschlagen, dass für jede Zuweisung eines Signalraumpunktes zu einem Symboltyp ein Funktionsaufruf manuell implementiert werden muss, der angibt, ob es sich bei dem Signalraumpunkt um ein Datensymbol oder ein Pilotsymbol, oder ein Nullsymbol, oder ein Dummysymbol handelt, wobei letzteres in der weiteren Verarbeitung nicht mehr zu berücksichtigen ist. Weiterhin muss ebenfalls mitgeteilt werden, mit welcher Modulationsart die einzelnen Signalraumpunkte moduliert sind. Gerade für OFDM-Signale, die mehrere tausend Signalraumpunkte beinhalten, ist eine solche manuelle Zuweisung sehr fehleranfällig, zeitaufwendig und erfordert die genaue Kenntnis des zu implementierenden Standards. Das dokument "OFDM VSA PC Software" von Rohde und Schwarz, veröffentlicht am 10.12.2009 offenbart, dass eine Zuordnungseinheit die einzelnen Signalraumpunkte der OFDM-Symbolen eines OFDM Signals in einem Konstellationsdiagramm und in einer Rahmenleistungsmatrix darstellt, wobei die Rahmenleistungsmatrix die Leistung der einzelnen Signalraumpunkte auf dem jeweiligen Unterträger des OFDM-Signals abbildet.

Es ist daher die Aufgabe der erfindungsgemäßen Auswerteeinheit und des erfindungsgemäßen Verfahrens zum Betreiben der Auswerteeinheit eine Lösung zu schaffen, um möglichst einfach und möglichst schnell und möglichst zuverlässig die einzelnen Signalraumpunkte der OFDM-Symbole innerhalb eines OFDM-Signals zu bekannten Symbolarten, wie z.B. Datensymbolen oder Pilotsymbolen oder Nullsymbolen oder Dummysymbolen zuzuordnen und um gleichzeitig die vorliegende Modulationsart der einzelnen Signalraumpunkte angeben zu können.

Die Aufgabe wird bezüglich der Auswerteeinheit durch die Merkmale des Anspruchs 1 und bezüglich des Verfahrens zum Betreiben der Auswerteeinheit durch die Merkmale des Anspruchs 10 gelöst. Der Anspruch 14 beinhaltet ein Computerprogramm mit Programmcode-Mittel, um sämtliche Verfahrensschritte ausführen zu können, wenn das Programm auf einem Computer oder einem digitalen Signalprozessor ausgeführt wird. Der Anspruch 15 enthält ein Computerprogramm-Produkt mit insbesondere auf einen maschinenlesbaren Träger gespeicherten Programmcode-Mittel, um alle Verfahrensschritte durchführen zu können, wenn das Programm auf einem Computer oder einem digitalen Signalprozessor ausgeführt wird. In den jeweiligen Unteransprüchen sind vorteilhafte Weiterbildungen der erfindungsgemäßen Auswerteeinheit sowie des erfindungsgemäßen Verfahrens zum Betreiben der Auswerteeinheit angegeben.

Verschiedene Ausführungsbeispiele der Erfindung werden nachfolgend unter Bezugnahme auf die Zeichnung beispielhaft beschrieben. Gleiche Gegenstände weisen dieselben Bezugszeichen auf. Die entsprechenden Figuren der Zeichnung zeigen im Einzelnen:
- Fig. 1: ein Ausführungsbeispiel eines Blockschaltbilds, das den Aufbau der erfindungsgemäßen Auswerteeinheit zeigt;
- Fig. 2A: ein Ausführungsbeispiel eines OFDM-Signals, welches in einem Konstellationsdiagramm dargestellt ist;
- Fig. 2B: ein Ausführungsbeispiel des OFDM-Signals, welches in einem Rahmenleistungsmatrix dargestellt ist;
- Fig. 3A: ein Ausführungsbeispiel, das die Auswahl einer Modulationsart erläutert;
- Fig. 3B: ein Ausführungsbeispiel das zeigt, dass je nach ausgewählter Modulationsart eine entsprechende Anzahl an Konstellationskreisen in das Konstellationsdiagramm eingezeichnet sind;
- Fig. 3C: ein Ausführungsbeispiel der Rahmenleistungsmatrix, in welcher die Signalraumpunkte hervorgehoben sind, die in dem Konstellationsdiagramm innerhalb der Konstellationskreise liegen;
- Fig. 4A: ein Ausführungsbeispiel des Konstellationsdiagramms, in welchem die Konstellationskreise und die eingezeichneten Signalraumpunkte in ihrem Radius und ihrem Wert angepasst sind;
- Fig. 4B: ein Ausführungsbeispiel der Rahmenleistungsmatrix, in welcher die Signalraumpunkte hervorgehoben sind, die in dem Konstellationsdiagramm innerhalb der Konstellationskreise liegen;
- Fig. 5A: ein Ausführungsbeispiel über die Zuweisung der ausgewählten Signalraumpunkte zu einem Symboltyp;
- Fig. 5B: ein Ausführungsbeispiel einer Zuweisungsmatrix, die die bereits einem Symboltyp zugewiesenen Signalraumpunkte darstellt;
- Fig. 6: ein Ausführungsbeispiel der Zuweisungsmatrix, in der alle Signalraumpunkte eines OFDM-Signals einem Symboltyp zugewiesen sind;
- Fig. 7A: ein Ausführungsbeispiel eines noch nicht synchronisierten OFDM-Signals, welches in einem Konstellationsdiagramm eingezeichnet ist;
- Fig. 7B: ein Ausführungsbeispiel, das die Synchronisierung eines OFDM-Signals beschreibt;
- Fig. 7C: ein Ausführungsbeispiel eines synchronisierten OFDM-Signals, welches in dem Konstellationsdiagramm eingezeichnet ist;
- Fig. 8A: ein Ausführungsbeispiel eines OFDM-Signals, welches in einer Rahmenleistungsmatrix dargestellt ist, wobei einzelne Signalraumpunkte markierbar sind;
- Fig. 8B: ein Ausführungsbeispiel des OFDM-Signals, welches in einem Konstellationsdiagramm dargestellt ist, wobei einzelne Signalraumpunkte hervorgehoben sind;
- Fig. 9A: ein Ausführungsbeispiel eines Flussdiagramms für das erfindungsgemäße Verfahren, welches das synchronisieren eines OFDM-Signals und die Zuordnung der einzelnen Signalraumpunkte zu einem Symboltyp beschreibt;
- Fig. 9B: ein Ausführungsbeispiel eines Flussdiagramms für das erfindungsgemäße Verfahren, welches die Zuordnung der einzelnen Signalraumpunkte zu einem Symboltyp näher beschreibt; und
- Fig. 9C: ein Ausführungsbeispiel eines Flussdiagramms, für das erfindungsgemäße Verfahren, welches das Erstellen einer Zuweisungsmatrix näher beschreibt.

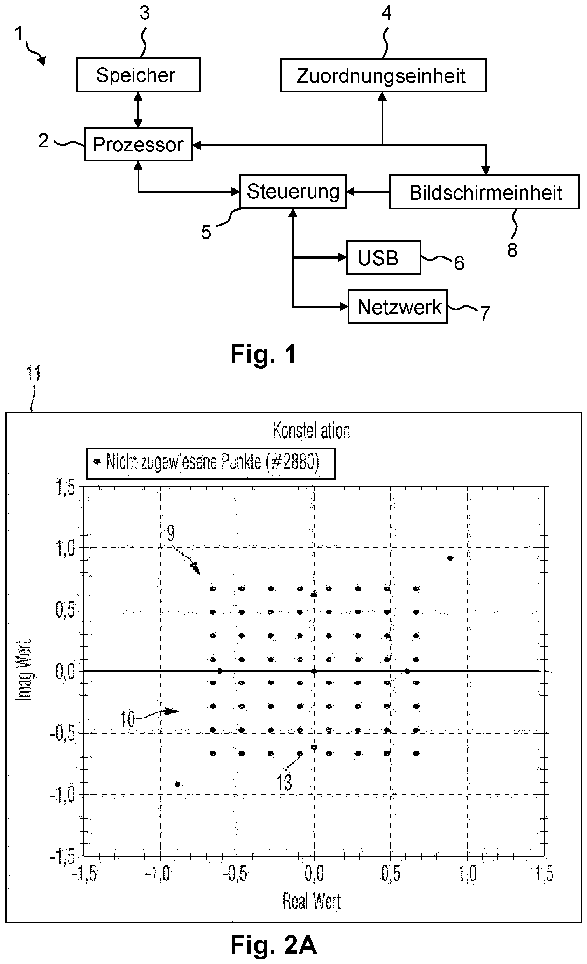

Fig. 1 zeigt ein Ausführungsbeispiel eines Blockschaltbilds, das den Aufbau der erfindungsgemäßen Auswerteeinheit 1 zeigt. Die erfindungsgemäße Auswerteeinheit 1 weist eine zentrale Datenverarbeitungseinheit 2, zumindest eine Speichereinheit 3 und eine Zuordnungseinheit 4 auf. Bei der zentralen Datenverarbeitungseinheit 1 kann es sich um einen oder mehrere Prozessoren und/oder FPGAs (engl. field programmable gate array; im (Anwendungs-)Feld-programmierbare (Logik-)Gatter-Anordnung) handeln. Bei der mit der zentralen Datenverarbeitungseinheit 2 verbundenen zumindest einen Speichereinheit 3 kann es sich um Festplatten und/oder Arbeitsspeicher und/oder USB-Datensticks (engl. universal serial bus; dt. Universeller Serieller Bus) handeln. Mit der zentralen Datenverarbeitungseinheit 2 ist noch eine Steuereinheit 5 verbunden. An die Steuereinheit 5 sind USB-Anschlüsse 6, Netzwerk-Anschlüsse 7 und eine Bildschirmeinheit 8 angeschlossen. Die Bildschirmeinheit 8 umfasst auch solche Bildschirmeinheiten 8, die z.B. einen resistiven oder kapazitiven Berührungsbildschirm aufweisen. Die Steuerungseinheit 5 ist über bekannte Schnittstellen mit der zentralen Datenverarbeitungseinheit 2 verbunden. Bei diesen bekannten Schnittstellen handelt es sich z.B. um PCI (engl. peripheral component interconnect; dt. dezentrale Bauteilverbindung), bzw. PCIe-Schnittstellen (engl. PCI-Express; dt. PCI-Express). Allerdings eignen sich sämtliche bekannte Schnittstellen zur Anbindung der Steuereinheit 5 an die zentrale Datenverarbeitungseinheit 2. Selbiges gilt für die Anbindung der weiteren, bisher aufgezählten Einheiten bzw. Peripheriegeräte.

Ein zu analysierendes OFDM-Signal 9 befindet sich dabei in der Speichereinheit 3. Das OFDM-Signal 9 kann über den USB-Anschluss 6 oder den Netzwerk-Anschluss 7 auf die zumindest eine Speichereinheit 3 kopiert werden. Es ist ebenfalls möglich, dass an die zentrale Datenverarbeitungseinheit 2 ein System zur Erzeugung von einem oder mehreren OFDM-Signale 9 angeschlossen ist. Ein solches in Fig. 1 nicht dargestelltes System, kann das erzeugte zumindest eine OFDM-Signal direkt in die zumindest eine Speichereinheit 3 kopieren.

Dieses aufgezeichnete OFDM-Signal 9 ist zumindest teilweise synchronisiert. So musste die bereits bekannte Anzahl an Unterträgern, die Länge des Cyclic Prefix (dt. zyklisches Präfix), bzw. der Guard Length (dt. Schutzlänge), die Symbolrate und die Trägerfrequenz eingegeben werden. Eine solche zumindest teilweise Synchronisation kann beispielsweise mit der Software "R&S®FS-K96/-K96PC OFDM Vector Signal Analysis" von Rohde & Schwarz erfolgen.

Die zentrale Datenverarbeitungseinheit 2 lädt anschließend das zumindest eine OFDM-Signal 9 aus der zumindest einen Speichereinheit 3 und übergibt dieses an die Zuordnungseinheit 4. Ein solches OFDM-Signal 9 enthält eine Vielzahl von OFDM-Symbolen 10, sowie beispielsweise die Information, auf welchen Unterträgern die jeweiligen OFDM-Symbole 10 moduliert sind. Jedes OFDM-Symbol 10 beinhaltet wiederum eine Vielzahl von Signalraumpunkten 13. Die Zuordnungseinheit 4 stellt die einzelnen Signalraumpunkte 13 des zumindest einen OFDM-Signals 9 in einem Konstellationsdiagramm 11 und in einer Rahmenleistungsmatrix 12 dar. Das Konstellationsdiagramm 11 und die Rahmenleistungsmatrix 12 werden bevorzugt zur selben Zeit nebeneinander auf der Bildschirmeinheit 8 dargestellt.

Fig. 2A zeigt ein Ausführungsbeispiel eines OFDM-Signals 9, welches in einem Konstellationsdiagramm 11 dargestellt ist. Ein OFDM-Symbol 10 setzt sich dabei aus der Summe aller Unterträger und deren Zuständen zusammen. Ein OFDM-Symbol 10 umfasst dabei so viele Signalraumpunkte 13, wie es Unterträger gibt. Jeder Signalraumpunkt 13 eines OFDM-Symbols 10 besteht dabei aus einem Realteil und einem Imaginärteil. In dem Beispiel aus Fig. 2A umfasst das zumindest eine OFDM-Signal 9 2880 Signalraumpunkte 13, die auf 45 OFDM-Symbole 10 verteilt sind und die auf verschiedene Unterträger moduliert sind. In den Konstellationsdiagramm 11 aus Fig. 2A wird auf der Ordinatenachse der Imaginärteil der Signalraumpunkte 13 und auf der Abszissenachse der Realteil der Signalraumpunkte 13 aufgetragen.

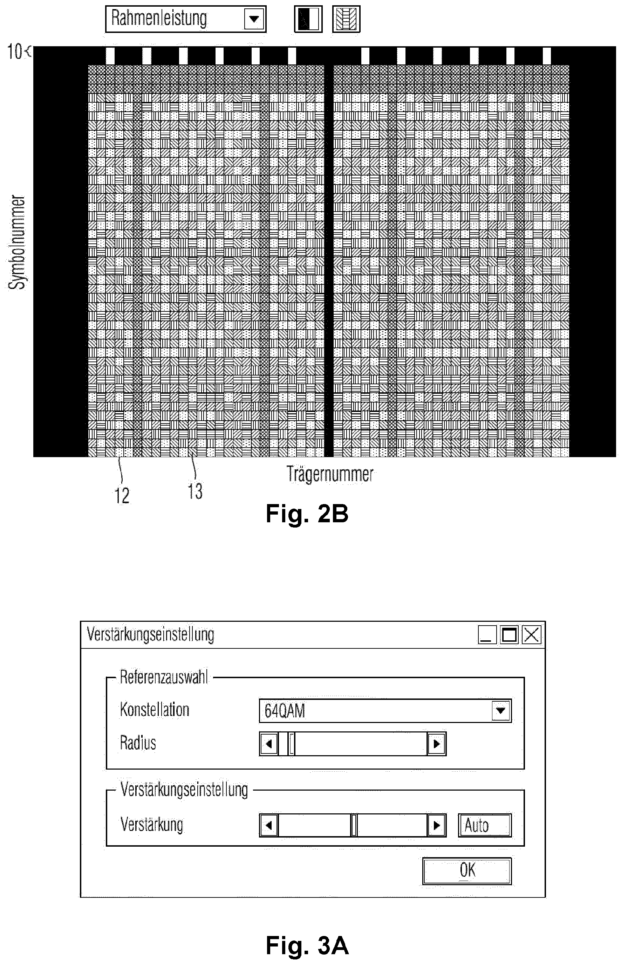

Fig. 2B zeigt ein Ausführungsbeispiel des OFDM-Signals 9, welches in einer Rahmenleistungsmatrix 12 eingezeichnet ist. Der Zeilenvektor der Rahmenleistungsmatrix 12 beinhaltet die Nummer des entsprechenden Unterträgers, auf dem der entsprechende Signalraumpunkt 13 moduliert ist.

Der Spaltenvektor der Rahmenleistungsmatrix 12 gibt die OFDM-Symbolnummer wieder. Das OFDM-Signal 9 wird von einem Sender an einen Empfänger übertragen, indem die einzelnen OFDM-Symbole 10 nacheinander beginnend bei der OFDM-Symbolnummer null übertragen werden. Je nach Wert des Imaginärteils und des Realteils für die Signalraumpunkte 13 weisen die entsprechenden Stellen innerhalb der Rahmenleistungsmatrix 12 unterschiedliche Farben oder Schraffierungen auf. Zur besseren Übersichtlichkeit sind in Fig. 2B nur acht verschiedene Schraffierungen dargestellt.

Fig. 3A beschreibt, wie die Auswahl einer bestimmten Modulationsart festgelegt werden kann. In dem Dialogfenster aus Fig. 3A kann die entsprechende Modulationsart sowie der Radius der Konstellationskreise 20 und ein zweiter Verstärkungsfaktor ausgewählt werden. Eine solche Auswahl geschieht bevorzugt über die Steuereinheit 5, an die beispielsweise eine berührungsempfindliche Bildschirmeinheit 8 angeschlossen ist. Dem OFDM-Signal 9 aus Fig. 2A ist zu entnehmen, dass die Datensymbole mit einer 64QAM (engl. Quadrature Amplitude Modulation, dt. Amplitudenquatraturmodulation) moduliert sind.

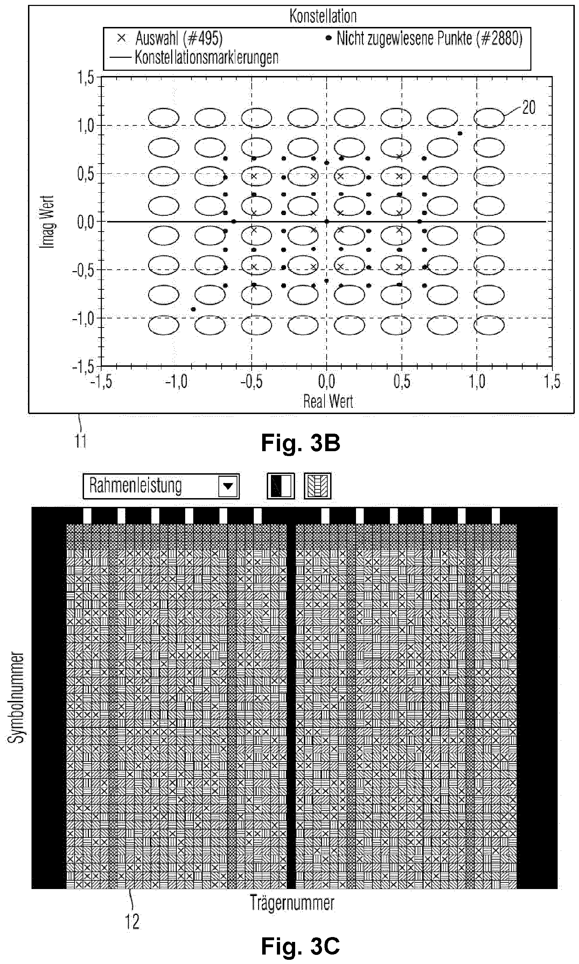

Fig. 3B zeigt ein Ausführungsbeispiel das je nach ausgewählter Modulationsart eine entsprechende Anzahl an Konstellationskreisen 20 beinhaltet, die in das Konstellationsdiagramm 11 eingezeichnet sind. Insgesamt sind in Fig. 3B 64 Konstellationskreise 20 sichtbar, weil im vorherigen Dialogfenster aus Fig. 3A eine 64QAM-Modulation ausgewählt wurde. Zu erkennen ist, dass die Konstellationskreise 20 in Fig. 3B nicht in ihrer Ausrichtung mit den eingezeichneten Signalraumpunkten 13 der OFDM-Symbole 10 zusammenwirken. Zu erkennen ist aber auch, dass die Signalraumpunkte 13 der OFDM-Symbole 10, die innerhalb eines solchen Konstellationskreises 20 liegen, gegenüber den anderen Signalraumpunkten 13 hervorgehoben sind. In Fig. 3B sind die hervorgehobenen Signalraumpunkte durch Kreuze dargestellt. Eine solche Hervorhebung kann allerdings auch durch eine andere Farbe erfolgen. Die Signalraumpunkte 13 können auch durch einen Benutzer einzeln oder in Gruppen markiert werden, wodurch diese sowohl im Konstellationsdiagramm 11, als auch in der Rahmenleistungsmatrix 12 hervorgehoben werden. Dies kann beispielsweise über den Berührungsbildschirm 8 oder ein anderes Eingabeelement geschehen. Eine solche Hervorhebung kann einerseits farblich erfolgen, aber auch durch Darstellung eines anderen Musters für die entsprechenden Signalraumpunkte 13. Die Konstellationskreise 20 sind dabei derart nebeneinander angeordnet, wie die für die entsprechende Modulationsart vorhandenen idealen Konstellationspunkte üblicherweise angeordnet sind. Neben einer 64QAM-Modulation können auch verschieden andere Modulationsarten ausgewählt werden. Diese umfassen beispielsweise eine BPSK-Modulation (engl. binary phase-shift keying; dt. Zweiphasenumtastung), eine QPSK-Modulation (engl. quadrature phase-shift keying; dt. Quadraturphasenumtastung), eine 45°-QPSK-Modulation oder auch eine 256QAM-Modulation, bzw. eine Vielzahl an weiteren Modulationsarten.

Fig. 3C zeigt ein Ausführungsbeispiel der Rahmenleistungsmatrix 12, in welche die Signalraumpunkte 13 hervorgehoben sind, die in dem Konstellationsdiagramm 11 aus Fig. 3B innerhalb der Konstellationskreise 20 liegen. Dabei sind die Signalraumpunkte 13, die in Fig. 3B hervorgehoben sind und als Kreuz dargestellt sind, in Fig. 3C ebenfalls als Kreuz dargestellt. Hierbei ist sehr gut die Wirkungsweise der erfindungsgemäßen Zuordnungseinheit 4 zu erkennen. Sowohl das Konstellationsdiagramm 11, als auch die Rahmenleistungsmatrix 12 werden durch die erfindungsgemäße Zuordnungseinheit 4 gleichzeitig auf der Bildschirmeinheit 8 dargestellt. Signalraumpunkte 13, die beispielsweise innerhalb der Konstellationskreise 20 liegen, werden durch die Zuordnungseinheit 4 sowohl in dem Konstellationsdiagramm 11 als auch in der Rahmenleistungsmatrix 12 deutlich hervorgehoben. Damit ist besonders gut ersichtlich, welche Signalraumpunkte 13 innerhalb der OFDM-Symbole 10 auf welchen Unterträgern moduliert sind und zu welcher Zeit innerhalb des OFDM-Signals 9 diese auf den jeweiligen Unterträgern übertragen werden.

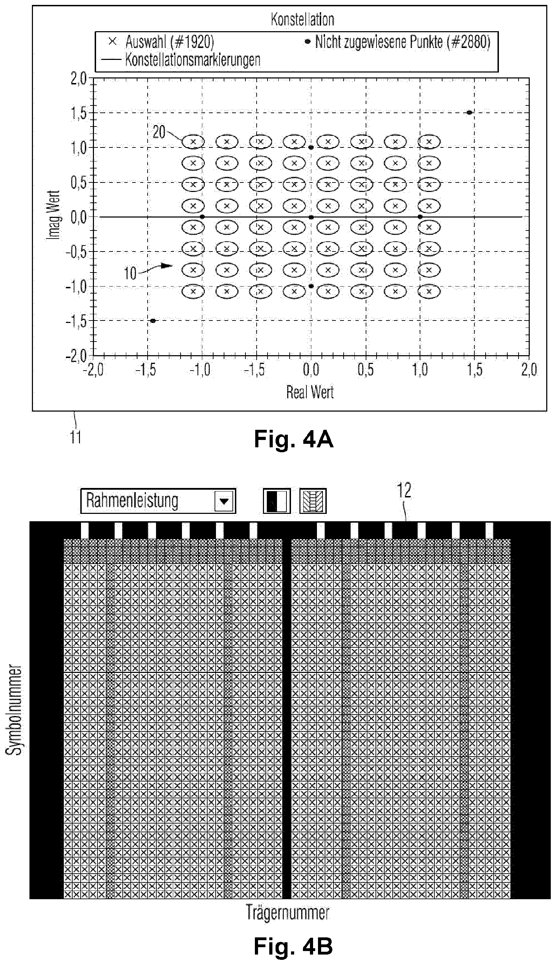

Fig. 4A zeigt ein Ausführungsbeispiel, in welchem die Konstellationskreise 20 und die eingezeichneten Signalraumpunkte 13 in ihrem Radius und ihrem Wert angepasst sind. Das Bild aus Fig. 4A entsteht dadurch, dass die Radien der Konstellationskreise 20 derart einstellbar sind, dass sich die einzelnen Konstellationskreise 20 nicht überlappen und/oder dass der Imaginärteil und der Realteil der einzelnen Signalraumpunkte 13 mit einem derartigen zweiten Verstärkungsfaktor multiplizierbar ist, dass die Signalraumpunkte 13 bevorzugt im Mittelpunkt der Konstellationskreise 20 angeordnet sind. Dabei wird bevorzugt der zweite Verstärkungsfaktor durch die Zuordnungseinheit 4 bevorzugt solange verändert, bis möglichst viele Signalraumpunkte 13 im Mittelpunkt der Konstellationskreise 20 liegen. Die Zuordnungseinheit 4 erfasst dabei die Lage aller Signalraumpunkte 13 für jeden eingestellten Wert des zweiten Verstärkungsfaktors. Über eine Brute-Force-Methode (dt. Methode der rohen Gewalt) werden alle Einstellungen des zweiten Verstärkungsfaktors durchlaufen und die Position der Signalraumpunkte 13 aufgezeichnet.

Der zweite Verstärkungsfaktor selbst wird dabei nur in sinnvollen Grenzen und mit einer vorher festgelegten Schrittweite durchlaufen. Die Schrittweite, mit der der Verstärkungsfaktor verändert wird kann je nach Qualität des OFDM-Signals 9 durch die Zuordnungseinheit 4 verändert werden. Bei einem qualitativ hochwertigen OFDM-Signal 9, wie es beispielsweise in Fig. 4A dargestellt ist, kann die Schrittweite, mit der der zweite Verstärkungsfaktor bei jeder Iteration erhöht oder erniedrigt wird, vergrößert werden. Der den Signalraumpunkten 13 in Fig. 4A zugrunde liegende zweite Verstärkungsfaktor kann folglich schneller ermittelt werden. Die Einstellung des zweiten Verstärkungsfaktors und des Radius der Konstellationskreise 20 kann, wie in Fig. 3A dargestellt, auch manuell erfolgen, wobei die Zuordnungseinheit 4 im Rahmen einer automatischen Skalierung deutlich bessere Ergebnisse liefert. Der Radius der Konstellationskreise 20 kann bei besonders schlechten OFDM-Signalen 9 dabei noch nachträglich geändert werden.

Gut zu erkennen ist in dem Ausführungsbeispiel aus Fig. 4A, dass ungefähr in dem Mittelpunkt der Konstellationskreise 20 eine Vielzahl von Signalraumpunkten 13 zu liegen kommt. Aufgrund der Tatsache, dass meist keine Piloten mit einer 64QAM moduliert sind, kann davon ausgegangen werden, dass es sich bei den Signalraumpunkten 13, die innerhalb der Konstellationskreise 20 zu liegen kommen, um Datensymbole handelt. Sehr gut zu erkennen ist, dass die Zuordnungseinheit 4 diejenigen Signalraumpunkte 13 in den OFDM-Symbolen 10 hervorhebt, die innerhalb der Konstellationskreise 20 zu liegen kommen. In dem Ausführungsbeispiel aus Fig. 4A werden die hervorgehobenen Signalraumpunkte 13 durch Kreuze dargestellt. Auch eine farbige Darstellung der hervorgehobenen Signalraumpunkte 13 ist möglich. Die Zuordnungseinheit 4 teilt dabei mit, dass von den 2880 Signalraumpunkten 13 des OFDM-Signals 9 1920 Signalraumpunkte 13 innerhalb der Konstellationskreise 20 liegen. Es ist weiterhin möglich, das Boosting (dt. Verstärkung) der Konstellationskreise 20 zu ändern. Dabei können die eingezeichneten Konstellationskreise 20 mit einem ersten Verstärkungsfaktor multipliziert werden. Dieser erste Verstärkungsfaktor kann manuell über die Steuereinheit 5, bevorzugt aber automatisch durch die Zuordnungseinheit 4 derart eingestellt werden, dass möglichst viele Signalraumpunkte 13 von den OFDM-Symbolen 10 innerhalb der Konstellationskreise 20 liegen. Bevorzugt wird zuerst der zweite Verstärkungsfaktor eingestellt, bis eine maximale Anzahl an Signalraumpunkten 13 innerhalb der Konstellationskreise 20 liegt. Im Anschluss daran kann der erste Verstärkungsfaktor derart eingestellt werden, bis diese Signalraumpunkte 13 möglichst genau im Zentrum der Konstellationskreise 20 zum liegen kommen, wie dies in Fig. 4A gezeigt ist.

Fig. 4B zeigt ein Ausführungsbeispiel der Rahmenleistungsmatrix 12, in welcher die Signalraumpunkte 13 der OFDM-Symbole 10 hervorgehoben sind, die in dem Konstellationsdiagramm 11 innerhalb der Konstellationskreise 20 liegen. Die hervorgehobenen Signalraumpunkte 13 werden ebenfalls durch Kreuze dargestellt, wobei auch eine farbliche Darstellung möglich wäre. Sehr gut ist in Fig. 4B die Arbeitsweise der erfindungsgemäßen Zuordnungseinheit 4 innerhalb der Auswerteeinheit 1 zu erkennen. Die Signalraumpunkte 13, die in Fig. 4A innerhalb der Konstellationskreise 20 liegen und dort hervorgehoben sind, werden durch die Zuordnungseinheit 4 auch innerhalb der Rahmenleistungsmatrix 12 in Fig. 4B hervorgehoben. Dadurch kann leicht überprüft werden, ob beispielsweise die erzeugten Datensymbole, die durch Auswahl einer entsprechenden Modulationsart in dem Konstellationsdiagramm 11 markiert sind, auch durch die gewünschten Unterträger zur gewünschten Zeit innerhalb des OFDM-Signals 9 übertragen werden.

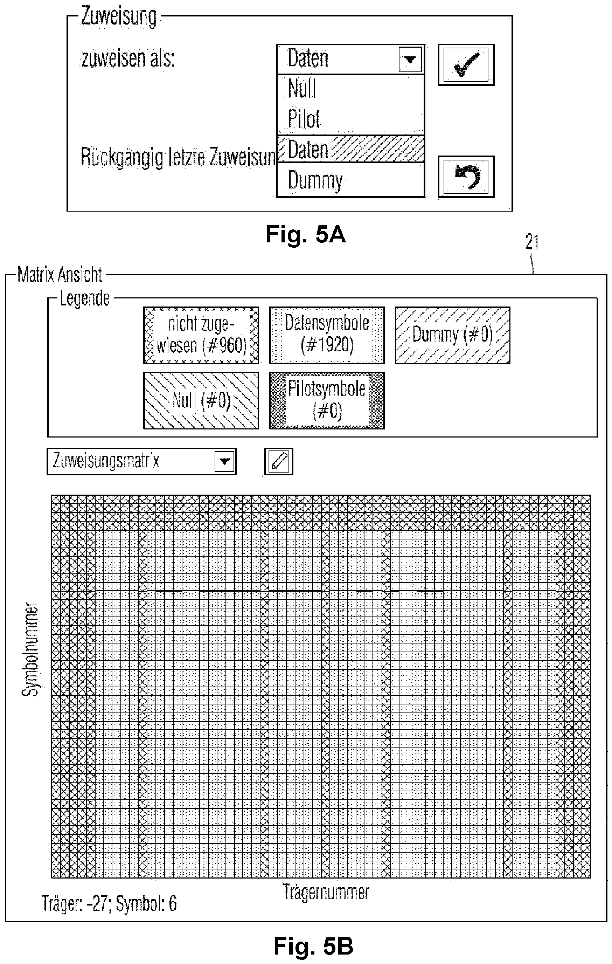

Fig. 5A zeigt ein Ausführungsbeispiel, das die Zuweisung der ausgewählten Signalraumpunkte 13 zu einem Symboltyp näher beschreibt. In dem Dialogfenster aus Fig. 5A können im Folgenden die ausgewählten Signalraumpunkte 13 einem bestimmten Symboltyp zugeordnet werden. Derzeit stehen vier verschiedene Symboltypen zur Verfügung. Diese umfassen das Nullsymbol (engl. zero-symbol), das Pilotsymbol (engl. pilot-symbol), das Datensymbol (engl. data-symbol) und das Dummysymbol (engl. don't-care-symbol). Symbole, die die Daten für die Präambel enthalten, können beispielsweise der Klasse der Pilotsymbole zugeordnet werden. Falls die Pilotsymbole beispielsweise ein Signalling-Field (dt. Signalisierungsfeld) enthalten, kann es vorteilhaft sein, diese als Datensymbole oder Dummysymbole zu definieren, um dadurch auch Frames (dt. Rahmen) mit unterschiedlichem Inhalt im Signalling-Field analysieren zu können. Allerdings kann auch für das Präambelsymbol ein neuer Symboltyp angelegt werden. Die Auswahl des entsprechenden Symboltyps erfolgt durch die Steuereinheit 5, an die verschiedene Eingabegeräte angeschlossen sind. In dem Beispiel aus den vorangegangenen Zeichnungsfiguren handelt es sich bei den Signalraumpunkten 13, die innerhalb der Konstellationskreise 20 zu liegen kommen, um Datensymbole. Sobald der entsprechende Eintrag durch die Steuereinheit 5 ausgewählt ist, weist die Zuordnungseinheit 4 den ausgewählten Signalraumpunkten 13 den Symboltyp für die Datensymbole zu.

Fig. 5B zeigt ein Ausführungsbeispiel einer Zuweisungsmatrix 21 in der die Signalraumpunkte 13 dargestellt sind, denen bereits ein Symboltyp zugewiesen wurde. Die Zuweisungsmatrix 21 wird durch die Zuordnungseinheit 4 anstelle der Rahmenleistungsmatrix 12 dargestellt. Der Aufbau der Zuweisungsmatrix 21 erfolgt analog zum Aufbau der Rahmenleistungsmatrix 12. In dem Zeilenvektor werden die Nummern der verschiedenen Unterträger dargestellt, in dem Spaltenvektor die OFDM-Symbolnummer. In dem Beispiel aus Fig. 5B sind einzig die Datensymbole dargestellt.

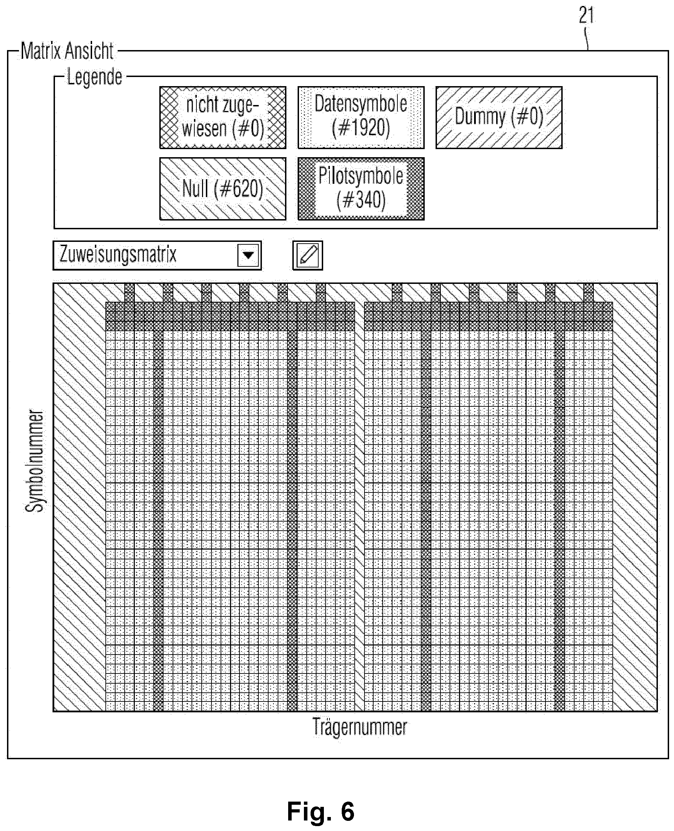

Fig. 6 zeigt ein Ausführungsbeispiel der Zuweisungsmatrix 21, in der allen Signalraumpunkten der OFDM-Symbole 10 eines OFDM-Signals 9 ein Symboltyp zugewiesen ist. Die unterschiedlichen Symboltypen werden durch unterschiedliche Farben oder durch unterschiedliche Schraffierungen von der erfindungsgemäßen Zuordnungseinheit 4 dargestellt. Zu erkennen ist, dass die ersten und die letzten Träger vornehmlich für die Übertragung der Nullsymbole verwendet werden. Diese Nullsymbole, deren Imaginärteil und Realteil in etwa den Wert 0 aufweisen, sind in Fig. 4A in der Mitte des Konstellationsdiagramms 11 dargestellt. Die in Fig. 6 dargestellten Pilotsymbole sind in Fig. 4A ebenfalls auf der Abszissenachse und der Ordinatenachse sichtbar dargestellt. Die Pilotsymbole sind in diesem Fall beispielsweise mit einer 45°-QPSK-Modulation moduliert. Diese Modulationsart ist gegenüber einer 64QAM-Modulation deutlich robuster gegen Störungen. Signalraumpunkte 13 von OFDM-Symbolen 10, die zu der Präambel des OFDM-Signals 9 gehören und in Fig. 4A mit einem Wert des Imaginärteils von ungefähr -1,5 bzw. 1,5 und einem Wert des Realteils von ungefähr -1,5 bzw. 1,5 dargestellt sind, werden ebenfalls zu den Pilotsymbolen gezählt. In Fig. 6 sind überdies keine Dummysymbole dargestellt. Dummysymbole selbst würden für die Analyse des OFDM-Signals 9 durch spätere Messmittel nicht berücksichtigt. Die in Fig. 6 dargestellte Zuweisungsmatrix 21 kann von der Zuordnungseinheit 4 in der zumindest einen Speichereinheit 3 gespeichert werden. Dabei wird die Zuweisungsmatrix 21 bevorzugt als XML-Datei gespeichert. Ebenfalls stellt die Zuordnungseinheit 4 auf einer angeschlossenen Bildschirmeinheit 8 dar, wie viele Signalraumpunkte 13 jedem Symboltyp zugewiesen sind. In Fig. 6 sind von 2880 Signalraumpunkten 13 genau 1920 zu Datensymbolen, genau 340 zu Pilotsymbolen und genau 620 zu Nullsymbolen zugewiesen. Es wird weiterhin angezeigt, dass alle Signalraumpunkte 13 einem Symboltyp zugewiesen sind und dass kein Signalraumpunkt 13 einem Dummysymbol zugewiesen wurde.

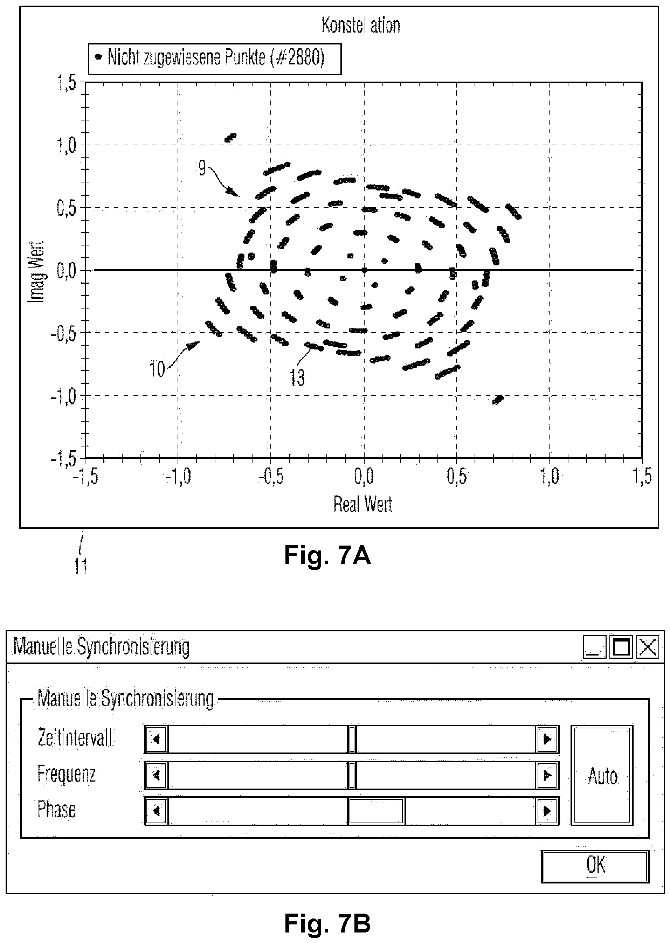

Fig. 7A zeigt ein Ausführungsbeispiel eines noch nicht synchronisierten OFDM-Signals 9, welches in einem Konstellationsdiagramm 11 eingezeichnet ist. Das zu analysierende OFDM-Signal 9 wurde, wie bereits beschrieben, zwar schon teilweise synchronisiert, indem beispielsweise die Anzahl der Unterträger angegeben wurden, oder die Länge des Guard-Intervalls, bzw. des Cyclic Prefix eingegeben werden musste. Allerdings erfordert das korrekte Zuweisen der einzelnen Signalraumpunkte 13 innerhalb des OFDM-Signals 9 zu Datensymbolen oder Pilotsymbolen oder Nullsymbolen oder Dummysymbolen, dass die Frequenz, das Timing und die Phase des zu untersuchenden OFDM-Signals 9 synchronisiert wurde. Timingabweichungen führen für die Signalraumpunkte 13 zu Phasenfehlern, die mit der Zeit und der Frequenz zunehmen. Frequenzfehler führen für die Signalraumpunkte 13 zu Phasenfehlern, die ebenfalls mit der Zeit zunehmen. Beides führt zu kreisförmigen Verdrehungen des Konstellationsdiagramms 20, wie dies in Fig. 7A dargestellt ist. Derartige Verdrehungen erlauben oftmals keine eindeutige Zuordnung der Signalraumpunkte 13 zur jeweiligen Modulation.

Fig. 7B zeigt ein Ausführungsbeispiel, das die Möglichkeiten der Synchronisierung eines OFDM-Signals 9 beschreibt. Wie in Fig. 7B dargestellt ist, kann das Timing, die Frequenz und die Phase des zu analysierenden OFDM-Signals 9 eingestellt werden. Diese Einstellung kann einerseits manuell und andererseits automatisch erfolgen. Die entsprechenden Anweisungen nimmt die Zuordnungseinheit 4 von der Steuereinheit 5 entgegen, die mit übergeordnetem Eingabevorrichten verbunden ist. Bei einer automatischen Synchronisierung stellt die Zuordnungseinheit 4 nacheinander verschiedene Einstellungen von Timing, Frequenz und Phase ein. Dabei wird die Schrittweite mit der sich die einzelnen Einstellungen bezüglich ihrer Werte für Timing, Frequenz und Phase unterscheiden derart gewählt, dass der resultierende maximale Phasensprung zwischen zwei benachbarten Einstellungen für eine Größe des Timings oder der Frequenz oder der Phase deutlich kleiner ist, als der minimale Phasensprung zwischen zwei Signalraumpunkten 13 der höchstwertigsten Konstellation. Bei der höchstwertigsten Konstellation handelt es sich in Fig. 7B um eine 64QAM-Modulation, sodass der minimale Phasensprung bekannt ist. Bevorzugt werden allerdings zuerst nur die Frequenz und das Timing verändert. Sobald hier eine möglichst diskrete Verteilung der Signalraumpunkte 13 in dem Konstellationsdiagramm 20 vorliegt, wird die Phase gedreht, bis sich eine günstige Verteilung der Signalraumpunkte 13 bezüglich der Symmetrieachsen "X=0", "Y=0" und "X=Y" ergibt, wobei "X" die Abszissenachse ist auf der die Realteile der Signalraumpunkte 13 eingezeichnet sind und "Y" die Ordinatenachse ist auf der die Imaginärteile der Signalraumpunkte 13 eingezeichnet sind. Unter einer benachbarten Einstellung ist die Einstellung für das Timing, die Frequenz und die Phase zu verstehen, die sich an die vorherige Einstellung anschließt. Eine solche benachbarte Einstellung unterscheidet sich bevorzugt nur in einem Wert (Timing oder Frequenz oder Phase) von der vorherigen Einstellung. Zusätzlich kann noch eine Betrachtung der Phasenverteilung aufgenommen werden. Dabei wird die Phase und nicht die 2D-Verteilung in der komplexen Ebene des Konstellationsdiagramms berücksichtigt, wobei die Zuordnungseinheit 4 hier versucht, möglichst diskrete Werte für die Phasenverteilung zu erreichen. Innerhalb der Berechnung der Phasenverteilung kann überdies noch eine Pegelgewichtung erfolgen, sodass die Nullsymbole nicht miteinbezogen werden. Die Zuordnungseinheit 4 analysiert im Weiteren für welche Einstellung des Timings, der Frequenz und der Phase die Streuung der einzelnen Signalraumpunkte 13 in dem Konstellationsdiagramm 11 minimal ist. Die Streuung der einzelnen Signalraumpunkte 13 ist insbesondere dann minimal, wenn diese möglichst nahe zusammen liegen. Dies kann die Zuordnungseinheit 4 beispielsweise dadurch ermitteln, indem sie eine Matrix innerhalb der Speichereinheit 3 aufspannt und prüft, wie viele Signalraumpunkte 13 in diese fallen. Bei der optimalen Einstellung werden dabei möglichst wenig Pixel auf einer angeschlossene Bildschirmeinheit 8, die zur Darstellung der Signalraumpunkte 13 innerhalb des Konstellationsdiagramms 11 dienen, verwendet. Die Zuordnungseinheit 4 kann die Berechnung übernehmen, ohne dass die Bildschirmeinheit 8 für jede mögliche Kombination von Timing, Frequenz und Phase die entsprechenden Signalraumpunkte 13 der OFDM-Symbole 10 tatsächlich anzeigt. Die richtige Phase ist dann ermittelt, wenn die Signalraumpunkte 13 möglichst parallel zur Ordinatenachse und zur Abszissenachse ausgerichtet sind.

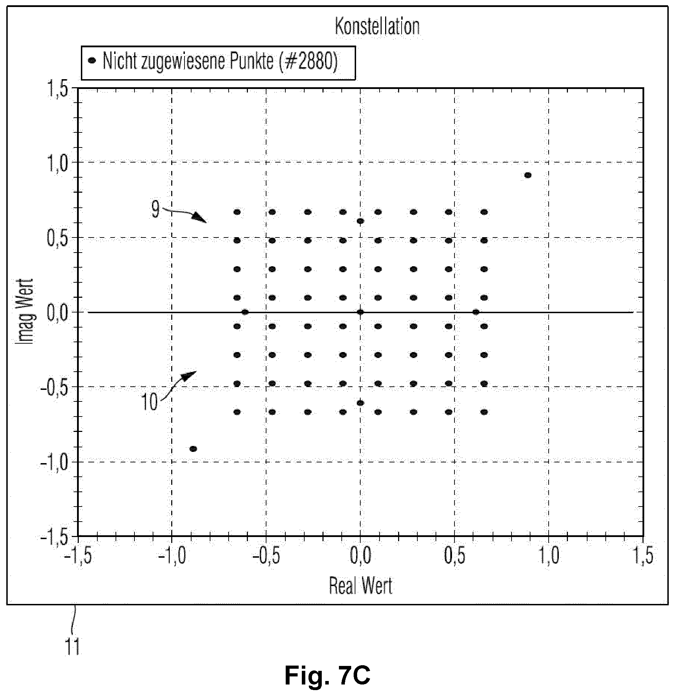

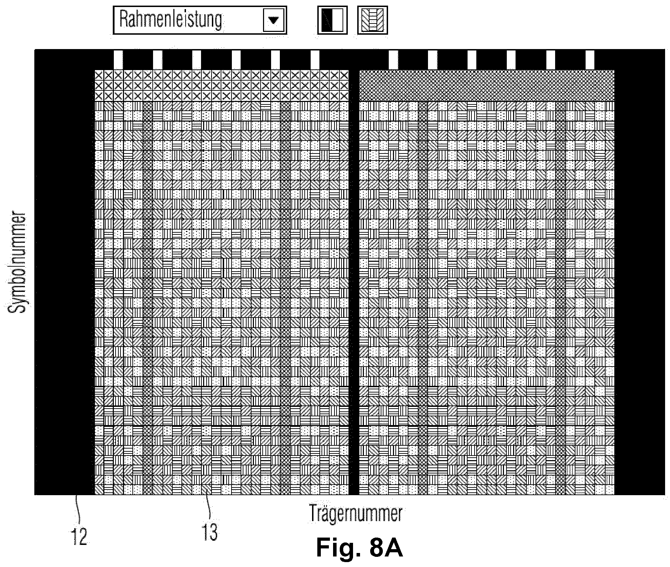

Fig. 7C zeigt ein Ausführungsbeispiel eines mit dem im Vorfeld beschriebenen Verfahren synchronisierten OFDM-Signals 9, welches in dem Konstellationsdiagramm 11 eingezeichnet ist. Erkennbar sind Datensymbole, die mit einer 64QAM-Modulation moduliert wurden. Weiterhin ersichtlich sind die Nullsymbole und die Pilotsymbole, die mit einer 45°-QPSK-Modulation moduliert wurden. Außerdem sind noch die Präambeldaten sichtbar, die wie bereits beschrieben, den Pilotdaten zugeordnet werden. Fig. 8A zeigt ein Ausführungsbeispiel eines OFDM-Signals 9, welches in einer Rahmenleistungsmatrix 12 dargestellt wird, wobei die einzelnen Signalraumpunkte 13 markierbar sind. Für den Fall, dass kein qualitativ hochwertiges OFDM-Signal 9 analysiert werden soll, können die einzelnen Signalraumpunkte auch erst in der Rahmenleistungsmatrix 12 markiert werden. Die Zuordnungseinheit 4 hebt die markierten Signalraumpunkte 13 sowohl in der Rahmenleistungsmatrix 12, als auch in den Konstellationsdiagramm 11 hervor. In dem Ausführungsbeispiel aus Fig. 8A sind die hervorgehobenen Signalraumpunkte 13 als Kreuze dargestellt. Den hervorgehobenen Signalraumpunkten 13 können anschließend durch die Zuordnungseinheit 4 die entsprechenden Symboltypen wie beispielsweise Datensymbole, Pilotsymbole, Nullsymbole oder Dummysymbole zugeordnet werden. In dem Ausführungsbeispiel aus Fig. 8A ist beispielsweise ein Teil der Pilotsymbole innerhalb der Rahmenleistungsmatrix 12 markiert. Eine solche Markierung kann beispielsweise durch den Benutzer mittels eines Eingabegerätes erfolgen. Die erfindungsgemäße Zuordnungseinheit 4 hebt im Folgenden die markierten Signalraumpunkte 13 sowohl in der Rahmenleistungsmatrix 12, als auch im Konstellationsdiagramm 11 deutlich hervor. Beispielsweise ist durch die Markierung von Preamblesymbolen innerhalb der Rahmenleistungsmatrix 12 und Betrachtung dieser innerhalb des Konstellationsdiagramms 11 sofort ersichtlich, ob es sich beispielsweise um eine geboostete QPSK-Modulation handelt. Selbstverständlich können auch einzelne Signalraumpunkte 13 innerhalb des Konstellationsdiagramms 11 markiert werden, die dann ebenfalls von der erfindungsgemäßen Zuordnungseinheit 4 in der Rahmenleistungsmatrix 12 hervorgehoben werden. Das Einfügen von Konstellationskreisen 20 zur Markierung ist hierfür nicht unbedingt notwendig.

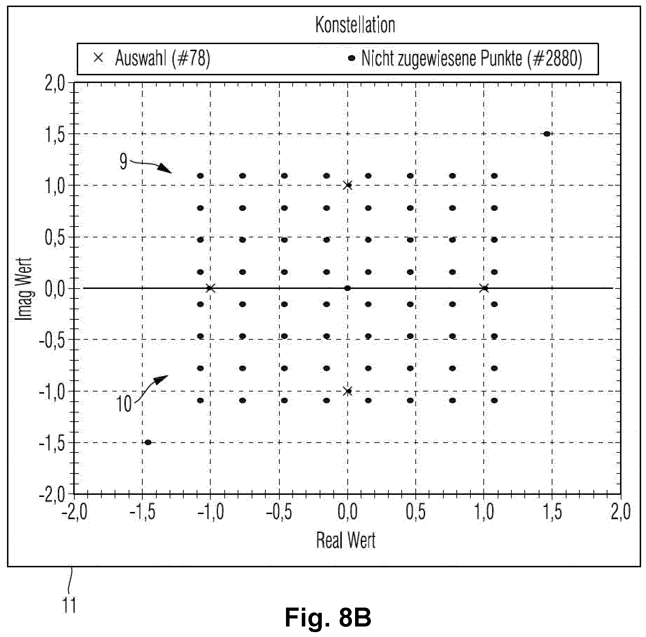

Fig. 8B zeigt ein Ausführungsbeispiel des OFDM-Signals 9, welches in einem Konstellationsdiagramm 11 dargestellt wird, wobei die einzelnen Signalraumpunkte 13 hervorgehoben sind. Gut zu erkennen ist, dass die in Fig. 8A markierten Signalraumpunkte 13 durch die erfindungsgemäße Zuordnungseinheit 4 auch in dem Konstellationsdiagramm 11 aus Fig. 8B hervorgehoben sind. Die hervorgehobenen Signalraumpunkte 13 sind dabei ebenfalls als Kreuze dargestellt, wobei ebenfalls eine farbliche Hervorhebung realisierbar ist. Dadurch können auf besonders vorteilhafte Weise die Zusammenhänge zwischen der Position der Signalraumpunkte 13 innerhalb der Rahmenleistungsmatrix 12 und der Signalraumpunkte 13 innerhalb des Konstellationsdiagramms 11 dargestellt werden.

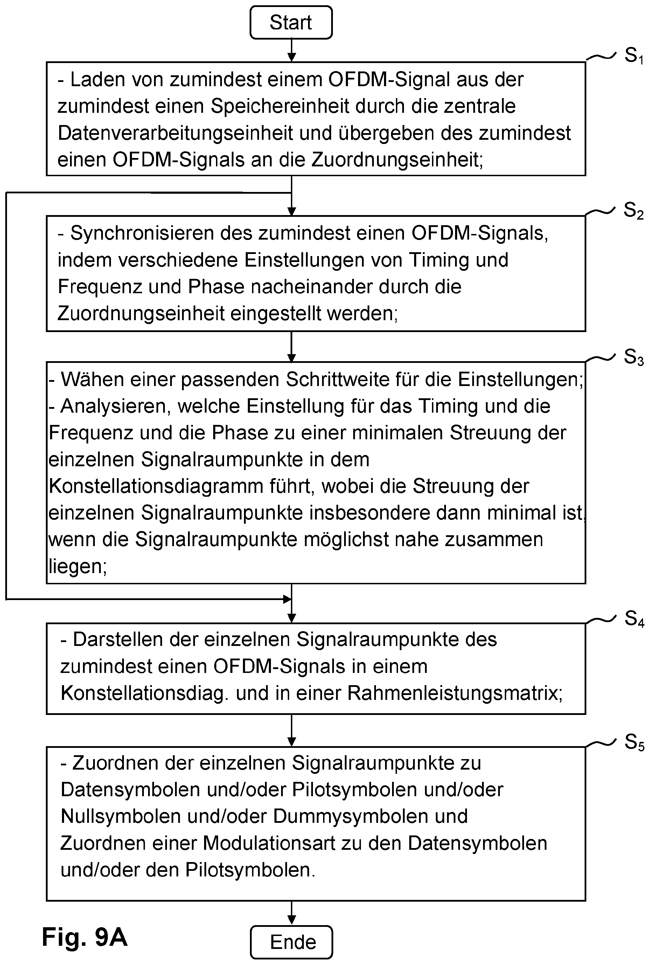

Fig. 9A beschreibt ein Ausführungsbeispiel eines erfindungsgemäßen Flussdiagramms, welches das Verfahren zum Betrieb einer Auswerteeinheit 1 näher beschreibt. In dem Flussdiagramm wird das Synchronisieren eines OFDM-Signals 9 und die Zuordnung der einzelnen Signalraumpunkte 13 zu einem Symboltyp näher beschrieben. Die Auswerteeinheit 1 weist dabei eine zentrale Datenverarbeitungseinheit 2, zumindest eine Speichereinheit 3 und eine Zuordnungseinheit 4 auf, wobei die Zuordnungseinheit 4 und die zumindest eine Speichereinheit 3 mit der zentralen Datenverarbeitungseinheit 2 verbunden sind.

In einem ersten Verfahrensschritt S₁ wird zumindest ein OFDM-Signal 9 aus der zumindest einen Speichereinheit 3 durch die zentrale Datenverarbeitungseinheit 2 geladen, um dieses anschließend durch die zentrale Datenverarbeitungseinheit 2 an die Zuordnungseinheit 4 zu übergeben. Wie bereits erläutert, soll das zumindest eine OFDM-Signal 9 durch die Zuordnungseinheit 4 näher beschrieben werden. Bei dem zumindest einen OFDM-Signal 9 handelt es sich um ein aufgezeichnetes OFDM-Signal 9. Dieses aufgezeichnete OFDM-Signal 9 ist zumindest teilweise bereits demoduliert. So musste bereits die Anzahl an Unterträgern, die Länge des Cyclic Prefixes, bzw. der Guard Length, die Symbolrate und die Trägerfrequenz eingegeben werden. Weiterhin kann auch angegeben werden, ob es sich um ein geburstetes Signal oder um ein kontinuierliches Signal handelt. Mit diesen bekannten Angaben kann das ursprünglich aufgezeichnete OFDM-Signal demoduliert werden, sodass daraus das bekannte OFDM-Signal 9 entsteht, wie es beispielsweise in den Figuren 2A und 7A in das Konstellationsdiagramm 11 eingezeichnet ist.

In einem zweiten Verfahrensschritt S₂ kann das zumindest eine OFDM-Signal 9 durch die Zuordnungseinheit 4 synchronisiert werden, indem verschiedene Einstellung von Timing, Frequenz und Phase nacheinander durchprobiert werden. Dabei wird die Schrittweite mit der sich die einzelnen Einstellungen bezüglich ihrer Werte für Timing, Frequenz und Phase unterscheiden derart gewählt, dass der resultierende maximale Phasensprung zwischen zwei benachbarten Einstellungen für eine Größe entweder des Timings oder der Frequenz oder der Phase deutlich kleiner ist, als der minimale Phasensprung zwischen zwei Signalraumpunkten 13 der höchstwertigsten Konstellation. Der Verfahrensschritt S₂ folgt optional auf den Verfahrensschritt S₁, weil das OFDM-Signal 9 nicht zwingend synchronisiert werden muss, sondern auch ein bereits synchronisiertes OFDM-Signal 9 von der zentralen Datenverarbeitungseinheit 2 von der Speichereinheit 3 geladen und an die Zuordnungseinheit 4 übergeben werden kann. Wie bereits beschrieben, werden sämtliche Kombinationen von Timing, Frequenz und Phase nacheinander durch die Zuordnungseinheit 4 eingestellt. Bevorzugt werden allerdings in einem ersten Schritt nur die Frequenz und das Timing verändert. Sobald hier eine möglichst diskrete Verteilung der Signalraumpunkte 13 in dem Konstellationsdiagramm 20 vorliegt, wird in einem zweiten Schritt die Phase verändert, bzw. gedreht, bis sich eine günstige Verteilung der Signalraumpunkte 13 bezüglich der Symmetrieachsen "X=0", "Y=0" und "X=Y" ergibt, wobei "X" die Abszissenachse ist auf der die Realteile der Signalraumpunkte 13 eingezeichnet sind und "Y" die Ordinatenachse ist auf der die Imaginärteile der Signalraumpunkte 13 eingezeichnet sind. Die richtige Phase ist dann ermittelt, wenn die Signalraumpunkte 13 möglichst parallel zur Ordinatenachse und zur Abszissenachse ausgerichtet sind.

In einem weiteren Verfahrensschritt S₃, der sich dem Verfahrensschritt S₂ anschließt, wird durch die Zuordnungseinheit 4 analysiert, für welche Einstellungen des Timings, der Frequenz und der Phase eine minimale Streuung der Signalraumpunkte 13 der OFDM-Symbole 10 in dem Konstellationsdiagramm 11 vorliegt. Die Streuung der einzelnen Signalraumpunkte 13 ist insbesondere dann minimal, wenn diese möglichst nahe zusammen liegen. Dies kann die Zuordnungseinheit 4 beispielsweise dadurch ermitteln, indem sie eine Matrix innerhalb der Speichereinheit 3 aufspannt und prüft, wie viele Signalraumpunkte 13 in diese fallen. Bei der optimalen Einstellung werden dabei möglichst wenig Pixel auf einer angeschlossene Bildschirmeinheit 8, die zur Darstellung der Signalraumpunkte 13 innerhalb des Konstellationsdiagramms 11 dienen, dargestellt. Besonders vorteilhaft ist, dass das OFDM-Signal 9 nicht für jede Einstellung des Timings, der Frequenz und der Phase tatsächlich auf die Bildschirmeinheit 8 gezeichnet werden muss, sondern dass der Zuordnungseinheit 4 die Werte für den Imaginärteil und den Realteil eines jeden einzelnen Signalraumpunkts 13 innerhalb des OFDM-Signals 9 bekannt sind und dass ausgehend von diesen Werten die Streuung der einzelnen Signalraumpunkte 13 berechnet wird. Ein nicht synchronisiertes OFDM-Signal 9 ist beispielsweise in Fig. 7A dargestellt. Nach der automatischen Synchronisierung durch die Zuordnungseinheit 4 sind die einzelnen Signalraumpunkte 13 wie in dem Konstellationsdiagramm 11 in Fig. 2A dargestellt angeordnet.

In dem nächsten Verfahrensschritt S₄ werden die einzelnen Signalraumpunkte 13 des zumindest einen OFDM-Signals 9 in einem Konstellationsdiagramm 11 und in einer Rahmenleistungsmatrix 12 durch die Zuordnungseinheit 4 dargestellt. Der Verfahrensschritt S₄ kann direkt nach dem Verfahrensschritt S₁ oder aber nach dem Verfahrensschritt S₃ ausgeführt werden.

In einem weiteren Verfahrensschritt S₅ werden die einzelnen Signalraumpunkte 13 zu Datensymbolen und/oder Pilotsymbolen und/oder Nullsymbole und/oder Dummysymbole zugeordnet, wobei zu den Datensymbolen und/oder den Pilotsymbolen zusätzlich noch eine Modulationsart zugeordnet wird. Durch diese Zuordnung wird das bisher unbekannte OFDM-Signal 9 genau beschrieben, sodass dieses für eine weitere Analyse, beispielsweise bezüglich der EVM, verwendet werden kann.

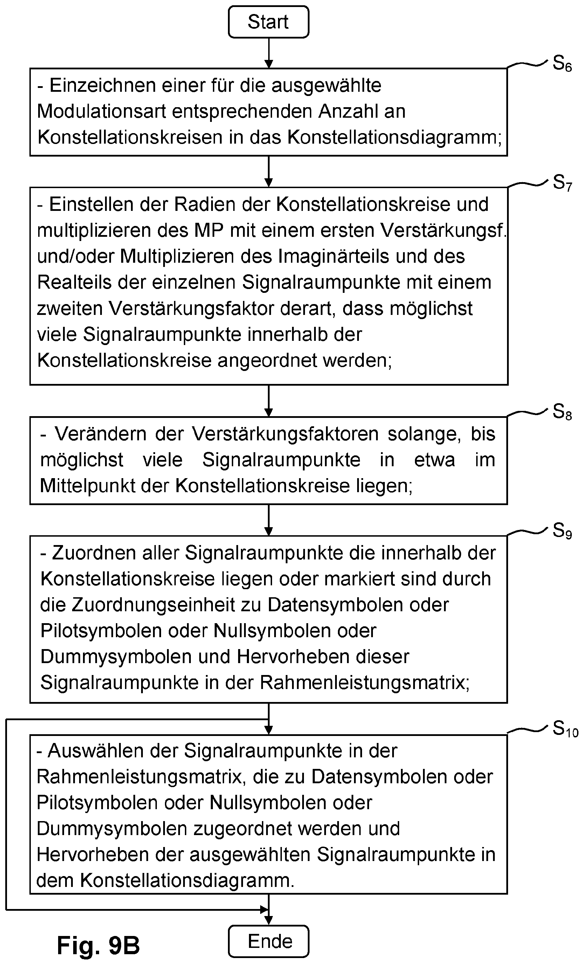

Fig. 9B zeigt ein Ausführungsbeispiel eines Flussdiagramms des erfindungsgemäßen Verfahrens, welches die Zuordnung der einzelnen Signalraumpunkte 13 zu einem Symboltyp näher beschreibt. Das Flussdiagramm aus Fig. 9B beschreibt dabei den in Fig. 9A dargestellten Verfahrensschritt S₅ genauer.

Der Verfahrensschritt S₆ wird ausgeführt, nachdem die einzelnen Signalraumpunkte 13 des zumindest einen OFDM-Signals 9 in dem Konstellationsdiagramm 11 und in der Rahmenleistungsmatrix 12 eingezeichnet sind. In dem Verfahrensschritt S₆ wird eine für die ausgewählte Modulationsart entsprechende Anzahl an Konstellationskreisen 20 in das Konstellationsdiagramm 11 eingezeichnet. Beispielsweise kann für das OFDM-Signal 9 aus Fig. 2A eine 64QAM-Modulation gewählt werden, sodass insgesamt 64 Konstellationskreise 20 in das Konstellationsdiagramm 11 aus Fig. 2A eingezeichnet werden.

Nachfolgend wird der Verfahrensschritt S₇ ausgeführt, in dem die Radien der Konstellationskreise 20 derart eingestellt werden, dass sich die einzelnen Konstellationskreise 20 nicht überlappen und/oder indem der Imaginärteil und der Realteil der einzelnen Signalraumpunkte 13 mit einem zweiten Verstärkungsfaktor derart multipliziert werden, dass möglichst viele Signalraumpunkte 13 innerhalb der Konstellationskreise 20 angeordnet werden.

In einem Verfahrensschritt S₈ wird der zweite Verstärkungsfaktor durch die Zuordnungseinheit 4 solange geändert, bis möglichst viele Signalraumpunkte 13 im Mittelpunkt der Konstellationskreise 20 liegen. Dabei prüft die Zuordnungseinheit 4 für jeden eingestellten Wert des zweiten Verstärkungsfaktors, wie viele der Signalraumpunkte 13 in etwa im Mittelpunkt der Konstellationskreise 20 liegen. Dies kann über ein Schätzverfahren erfolgen, welches beispielsweise den Mittelwert, bevorzugt den RMS (engl. root mean square; dt. quadratischer Mittelwert), aller Beträge der Signalraumpunkte 13 berechnet. Der Radius der Konstellationskreise 20 wird hierbei bevorzugt konstant gehalten. Die Schrittweite, mit der der zweite Verstärkungsfaktor geändert wird, kann bevorzugt von der Qualität des OFDM-Signals 9 abhängig gemacht werden. Bei einem qualitativ hochwertigen OFDM-Signal 9, wie dieses beispielsweise in Fig. 2A dargestellt ist, kann eine größere Schrittweite beim Verändern des zweiten Verstärkungsfaktors gewählt werden, als für den Fall, wenn es sich bei dem OFDM-Signal 9 um ein Signal handelt, dem starke Störungen überlagert sind. Selbiges gilt auch für den ersten Verstärkungsfaktor, der bevorzugt nach dem Einstellen des zweiten Verstärkungsfaktors eingestellt wird. Die Anzahl der Signalraumpunkte, die bereits durch Ausführen des Verfahrensschritts S₇ innerhalb der Konstellationskreise 20 liegt, ändert sich innerhalb des Verfahrensschritts S₈ bevorzugt nicht.

In dem Verfahrensschritt S₉ werden allen Signalraumpunkte 13, die innerhalb der Konstellationskreise 20 liegen, durch die Zuordnungseinheit 4, zu Datensymbolen oder Pilotsymbolen oder Nullsymbolen oder Dummysymbolen zugeordnet, wobei diese Signalraumpunkte 13 ebenfalls in der Rahmenleistungsmatrix 12 hervorgehoben werden. Dadurch ist es möglich, dass ein OFDM-Signal 9 dessen Aufbau vorher nicht exakt bekannt ist, näher beschrieben werden kann. Durch das Zuordnen wird nun bekannt, an welchen Stellen innerhalb des OFDM-Signals 9 beispielsweise die Datensymbole liegen, die für eine spätere Berechnung der EVM verwendet werden.

In einem optionalen Verfahrensschritt S₁₀ können auch die Signalraumpunkte 13 der OFDM-Symbole 10 in der Rahmenleistungsmatrix 12 ausgewählt werden, die anschließend zu Datensymbolen oder Pilotsymbolen oder Nullsymbolen oder Dummysymbolen zugeordnet werden. Die in der Rahmenleistungsmatrix 12 ausgewählten Signalraumpunkte 13 werden anschließend in dem Konstellationsdiagramm 11 hervorgehoben. Für den Fall, dass beispielsweise bekannt ist, auf welchen Unterträgern z.B. die Pilotsymbole übertragen werden, können die Signalraumpunkte 13 der OFDM-Symbole 10 auf diesen Unterträgern direkt Pilotsymbolen zugeordnet werden, unabhängig davon, ob diese letztlich alle innerhalb der Konstellationskreise 20 für die ausgewählte Modulationsart liegen.

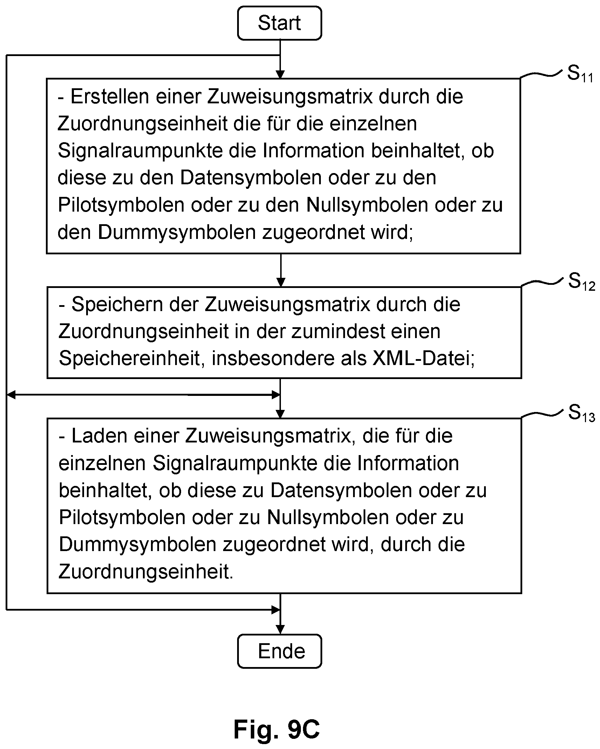

Fig. 9C zeigt ein Ausführungsbeispiel eines Flussdiagramms des erfindungsgemäßen Verfahrens, welches das Erstellen einer Zuweisungsmatrix 21 näher beschreibt. Der Verfahrensschritt S₁₁, welcher nach dem Verfahrensschritt S₅, bzw. respektive nach den Verfahrensschritten S₉ bzw. S₁₀ ausgeführt werden kann, gibt an, dass durch die Zuordnungseinheit 4 eine Zuweisungsmatrix 21 erstellt wird, die für die einzelnen Signalraumpunkte 13 die Information beinhaltet, ob diese zu den Datensymbolen oder zu den Pilotsymbolen oder zu den Nullsymbolen oder zu den Dummysymbolen zugeordnet werden. Eine solche Zuweisungsmatrix 21 beispielsweise in Fig. 6 dargestellt.

In dem Verfahrensschritt S₁₂ kann die Zuweisungsmatrix 21 durch die Zuordnungseinheit 4 in der zumindest einen Speichereinheit 3 als XML-Datei oder in einem beliebig anderen Format gespeichert werden. Innerhalb der XML-Datei wird für die Pilotsymbole neben der Modulationsart auch der konkrete ideale Punkt des Konstellationskreises 20 abgespeichert, in welchem jeder Signalraumpunkt 13 der Pilotsymbole zum liegen kommt.

Optional kann in Fig. 9C auch einzig der Verfahrensschritt S₁₃ ausgeführt werden, in welchem eine bereits vorhandene Zuweisungsmatrix 21 durch die Zuordnungseinheit 4 aus der zumindest einen Speichereinheit 3 geladen werden kann. Damit ist es möglich, dass ein bereits zuvor beschriebenes OFDM-Signal 9 nochmals näher analysiert werden kann, um z.B. Signalraumpunkte 13 von OFDM-Symbolen 10, die bereits einem Symboltyp zugeordnet sind, einem anderen Symboltyp zuzuordnen.

Es ist auch möglich, dass aus einem geladenen OFDM-Signal 9 ein ideales (Referenz-) OFDM-Signal zu erzeugen. Die Pilotsymbole werden entsprechend ihres spezifizierten Wertes, der dem geladenen OFDM-Signal 9 entnommen wird, gesetzt. Die Datensymbole können dabei entweder zufällig aus dem spezifizierten Modulationsalphabet oder dem geladenen OFDM-Signal 9 entnommen werden. Liegt beispielsweise eine 16QAM-Modulation innerhalb des geladenen OFDM-Signals 9 vor und enthalten alle OFDM-Symbole 10 mehrere Datensymbole, so wird für jedes Datensymbol eine zufällige Auswahl getroffen, welchen der 16 möglichen idealen Werte im Konstellationsdiagramm 11 das Datensymbol annimmt. Die vorhandenen Nullsymbole werden auf Null gesetzt und die Dummysymbole können beliebig belegt werden. Über die Wertzuweisung der Dummysymbole kann beispielsweise ein Rauschen eingestellt werden.

Außerdem ist es beim Laden des zumindest einen OFDM-Signals 9 aus der zumindest einen Speichereinheit 3 durch die zentrale Datenverarbeitungseinheit 2 möglich, dass nur bestimmte OFDM-Symbole 10 für die weitere Verarbeitung auswählbar sind.

Es ist außerdem möglich, dass benutzerdefinierte Modulationsarten erstellt werden können, indem die Position und die Anzahl der Konstellationskreise 20 beliebig einstellbar sind.

Im Rahmen der Erfindung sind alle beschriebenen und/oder gezeichneten Merkmale beliebig miteinander kombinierbar. Insbesondere können die Unteransprüche, das Verfahren betreffend, auch mit den Vorrichtungsansprüchen die Auswerteeinheit 1 betreffend und umgekehrt kombiniert werden.

## Patentansprüche

1. Auswerteeinheit (1) aufweisend eine zentrale Datenverarbeitungseinheit (2), zumindest eine Speichereinheit (3) und eine Zuordnungseinheit (4),
wobei die Zuordnungseinheit (4) und die zumindest eine Speichereinheit (3) mit der zentralen Datenverarbeitungseinheit (2) verbunden sind,
wobei die zentrale Datenverarbeitungseinheit (2) zumindest ein OFDM-Signal (9) aus der zumindest einen Speichereinheit (3) lädt und an die Zuordnungseinheit (4) übergibt,
**dadurch gekennzeichnet,**
**dass** die Zuordnungseinheit (4) die einzelnen Signalraumpunkte (13) der OFDM-Symbole (10) des zumindest einen OFDM-Signals (9) in einem Konstellationsdiagramm (11) und in einer Rahmenleistungsmatrix (12) darstellt, wobei die Rahmenleistungsmatrix (12) die Leistung der einzelnen Signalraumpunkte (13) auf dem jeweiligen Unterträger des OFDM-Signals (9) abbildet, wobei die Zuordnungseinheit (4) eine für eine zugeordnete Modulationsart entsprechende Anzahl an Konstellationskreisen (20) in das Konstellationsdiagramm (11) einzeichnet, wobei Signalraumpunkte (13), die innerhalb der Konstellationskreise (20) liegen, durch die Zuordnungseinheit (4) sowohl im Konstellationsdiagramm (11) als auch in der Rahmenleistungsmatrix (12) hervorgehoben dargestellt sind, sodass über die Diagramme (11, 12) zuordenbar ist, bei welchen Signalraumpunkten (13) es sich um Datensymbole und/oder Pilotsymbole und/oder Nullsymbole und/oder Dummysymbole handelt und mit welcher Modulationsart die Datensymbole und/oder Pilotsymbole moduliert sind.

2. Auswerteeinheit nach Anspruch 1,
**dadurch gekennzeichnet,**
**dass** die Radien der Konstellationskreise (20) derart einstellbar sind, dass sich die einzelnen Konstellationskreise (20) nicht überlappen und/oder dass die Mittelpunkte der Konstellationskreise (20) mit einem ersten Verstärkungsfaktor multiplizierbar sind und/oder dass der Imaginärteil und der Realteil der einzelnen Signalraumpunkte (13) mit einem derartigen zweiten Verstärkungsfaktor multiplizierbar sind, dass möglichst viele Signalraumpunkte (13) innerhalb der Konstellationskreise (20) angeordnet sind.

3. Auswerteeinheit nach Anspruch 2,
**dadurch gekennzeichnet,**
**dass** innerhalb der Zuordnungseinheit (4) der erste Verstärkungsfaktor und/oder der zweite Verstärkungsfaktor solange veränderbar ist, bis möglichst viele Signalraumpunkte (13) in etwa im Mittelpunkt der Konstellationskreise (20) liegen.

4. Auswerteeinheit nach einem der Ansprüche 1 bis 3,
**dadurch gekennzeichnet,**
**dass** alle Signalraumpunkte (13), die markiert sind, durch die Zuordnungseinheit (4) zu Datensymbolen und/oder Pilotsymbolen und/oder Nullsymbolen und/oder Dummysymbolen zuordenbar sind und dass die Signalraumpunkte (13) in der Rahmenleistungsmatrix (12) hervorgehoben sind.

5. Auswerteeinheit nach einem der vorherigen Ansprüche,
**dadurch gekennzeichnet,**
**dass** über die Rahmenleistungsmatrix (12) die Signalraumpunkte (13) auswählbar sind, die zu Datensymbolen und/oder Pilotsymbolen und/oder Nullsymbolen und/oder Dummysymbolen zuordenbar sind und dass die ausgewählten Signalraumpunkte (13) im Konstellationsdiagramm (11) hervorgehoben werden.

6. Auswerteeinheit nach einem der vorherigen Ansprüche,
**dadurch gekennzeichnet,**
**dass** die Zuordnungseinheit (4) das zumindest eine OFDM-Signal (9) synchronisiert, indem die Zuordnungseinheit (4) nacheinander verschiedene Einstellungen für Timing und Frequenz und Phase einstellt.

7. Auswerteeinheit nach einem der vorherigen Ansprüche,
**dadurch gekennzeichnet,**
**dass** die Zuordnungseinheit (4) anstelle oder zusätzlich zur Rahmenleistungsmatrix (12) eine Zuweisungsmatrix (21) erstellt, wobei die Zuweisungsmatrix (21) die einzelnen Signalraumpunkte (13) auf dem jeweiligen Unterträger des OFDM-Signals (9) abbildet, wobei die Zuweisungsmatrix (21) für die einzelnen Signalraumpunkte (13) die Information beinhaltet, ob diese zu Datensymbolen oder zu Pilotsymbolen oder zu Nullsymbolen oder zu Dummysymbolen zugeordnet sind.

8. Auswerteeinheit nach Anspruch 7,
**dadurch gekennzeichnet,**
**dass** die Zuordnungseinheit (4) die Zuweisungsmatrix (21) in der zumindest einen Speichereinheit (3), insbesondere als XML-Datei, speichert.

9. Auswerteeinheit nach einem der vorherigen Ansprüche,
**dadurch gekennzeichnet,**
**dass** die Zuordnungseinheit (4) eine Zuweisungsmatrix (21) lädt, die für die einzelnen Signalraumpunkte (13) die Information beinhaltet, ob diese zu Datensymbolen oder zu Pilotsymbolen oder zu Nullsymbolen oder zu Dummysymbolen zugeordnet sind.

10. Verfahren zum Betrieb einer Auswerteeinheit (1) aufweisend eine zentrale Datenverarbeitungseinheit (2), zumindest eine Speichereinheit (3) und eine Zuordnungseinheit (4),
wobei die Zuordnungseinheit (4) und die zumindest eine Speichereinheit (3) mit der zentralen Datenverarbeitungseinheit (2) verbunden sind,
mit den nachfolgenden Verfahrensschritten:
- Laden (S₁) von zumindest einem OFDM-Signal (9) aus der zumindest einen Speichereinheit (3) durch die zentrale Datenverarbeitungseinheit (2) und Übergeben des zumindest einen OFDM-Signals (9) an die Zuordnungseinheit (4);
**gekennzeichnet durch,**
- Darstellen (S₄) der einzelnen Signalraumpunkte (13) der OFDM-Symbole (10) des zumindest einen OFDM-Signals (9) in einem Konstellationsdiagramm (11) und in einer Rahmenleistungsmatrix (12), wobei die Rahmenleistungsmatrix (12) die Leistung der einzelnen Signalraumpunkte (13) auf dem jeweiligen Unterträger des OFDM-Signals (9) abbildet und wobei ein in einem der Diagramme (11, 12) hervorgehoben dargestellter Signalraumpunkt (13) im jeweils anderen Diagramm (11, 12) hervorgehoben dargestellt wird;
- Zuordnen (S₅) der einzelnen Signalraumpunkte (13) zu Datensymbolen und/oder Pilotsymbolen und/oder Nullsymbolen und/oder Dummysymbolen und Zuordnen einer Modulationsart zu den Datensymbolen und/oder den Pilotsymbolen;
- Einzeichnen (S₆) einer für die ausgewählte Modulationsart entsprechenden Anzahl an Konstellationskreisen (20) in das Konstellationsdiagramm (11); und
- Zuordnen (S₉) aller Signalraumpunkte (13), die innerhalb der Konstellationskreise (20) liegen oder markiert sind, durch die Zuordnungseinheit (4) zu Datensymbolen oder Pilotsymbolen oder Nullsymbolen oder Dummysymbolen und Hervorheben dieser Signalraumpunkte (13) in der Rahmenleistungsmatrix (12) .

11. Verfahren nach Anspruch 10,
**gekennzeichnet durch,**
folgende weitere Verfahrensschritte:
- Einstellen (S₇) der Radien der Konstellationskreise (20) derart, dass sich die einzelnen Konstellationskreise (20) nicht überlappen und/oder Multiplizieren der Mittelpunkte der Konstellationskreise (20) mit einem ersten Verstärkungsfaktor und/oder Multiplizieren des Imaginärteils und des Realteils der einzelnen Signalraumpunkte (13) mit einem zweiten Verstärkungsfaktor derart, dass möglichst viele Signalraumpunkte (13) innerhalb der Konstellationskreise (20) angeordnet werden;
- Verändern (S₈) des ersten Verstärkungsfaktors und/oder des zweiten Verstärkungsfaktors solange, bis möglichst viele Signalraumpunkte (13) in etwa im Mittelpunkt der Konstellationskreise (20) liegen.

12. Verfahren nach Anspruch 11,
**gekennzeichnet durch,**
folgenden weiteren Verfahrensschritt:
- Auswählen (S₁₀) der Signalraumpunkte (13) in der Rahmenleistungsmatrix (12), die zu Datensymbolen oder Pilotsymbolen oder Nullsymbolen oder Dummysymbolen zugeordnet werden, und Hervorheben der ausgewählten Signalraumpunkte (13) in dem Konstellationsdiagramm (11) .

13. Verfahren nach einem der Ansprüche 10 bis 12,
**gekennzeichnet durch,**
folgende weitere Verfahrensschritte:
- Erstellen (S₁₁) einer Zuweisungsmatrix (21) durch die Zuordnungseinheit (4), die für die einzelnen Signalraumpunkte (13) die Information beinhaltet, ob diese zu den Datensymbolen oder zu den Pilotsymbolen oder zu den Nullsymbolen oder zu den Dummysymbolen zugeordnet wird;
- Speichern (S₁₂) der Zuweisungsmatrix (21) durch die Zuordnungseinheit (4) in der zumindest einen Speichereinheit (3), insbesondere als XML-Datei;
- Laden (S₁₃) einer Zuweisungsmatrix (21), die für die einzelnen Signalraumpunkte (13) die Information beinhaltet, ob diese zu Datensymbolen oder zu Pilotsymbolen oder zu Nullsymbolen oder zu Dummysymbolen zugeordnet wird, durch die Zuordnungseinheit (4).

14. Computerprogramm mit Programmcode-Mitteln, um alle Schritte gemäß einem der Ansprüche 10 bis 13 durchführen zu können, wenn das Programm auf einem Computer oder einem digitalen Signalprozessor ausgeführt wird.

15. Computerprogramm-Produkt mit insbesondere auf einem maschinenlesbaren Träger gespeicherten Programmcode-Mitteln, um alle Schritte gemäß einem der Ansprüche 10 bis 13 durchführen zu können, wenn das Programm auf einem Computer oder einem digitalen Signalprozessor ausgeführt wird.

## Claims

1. An evaluation unit (1) comprising a central data-processing unit (2), at least one storage unit (3) and an allocation unit (4), wherein the allocation unit (4) and the at least one storage unit (3) are connected to the central data-processing unit (2), wherein the central data-processing unit (2) loads at least one OFDM signal (9) from the at least one storage unit (3) and transfers it to the allocation unit (4),
**characterised in that**
the allocation unit (4) displays the individual signal spaces (13) of the OFDM symbols (10) of the at least one OFDM signal (9) in a constellation diagram (11) and in a frame-output matrix (12),
wherein the frame-output matrix (12) images the output of the individual signal spaces (13) onto the respective sub-carrier of the OFDM signal (9),
wherein the allocation unit (4) draws into the constellation diagram (11) a corresponding number of constellation circles (20) for an allocated modulation type,
wherein signal spaces (13) which are disposed inside the constellation circles (20) are displayed highlighted by the allocation unit (4) both in the constellation diagram (11) and also in the frame-output matrix (12), in such a manner that it is possible to allocate via the diagrams (11, 12) at which signal spaces (13) the data symbols and/or pilot symbols and/or zero symbols and/or dummy symbols are present and with which modulation type the data symbols and/or pilot symbols are modulated.

2. The evaluation unit according to claim 1,
**characterised in that**
the radii of the constellation circles (20) can be adjusted in such a manner that the individual constellation circles (20) do not overlap and/or that the centre points of the constellation circles (20) can be multiplied by a first boosting factor and/or that the imaginary part and the real part of the individual signal spaces (13) can be multiplied by a second boosting factor such that the maximum possible number of signal spaces (13) are arranged within the constellation circles (20).

3. The evaluation unit according to claim 2,
**characterised in that**
the first boosting factor and/or the second boosting factor can be varied within the allocation unit (4) until the maximum possible number of signal spaces (13) are disposed approximately at the centre point of the constellation circles (20).

4. The evaluation unit according to any one of claims 1 to 3,
**characterised in that**
all of the signal spaces (13) which are marked can be allocated by the allocation unit (4) to data symbols and/or pilot symbols and/or zero symbols and/or dummy symbols, and that the signal spaces (13) are highlighted in the frame-output matrix (12).

5. The evaluation unit according to any one of the preceding claims,
**characterised in that**
the signal spaces (13) which can be allocated to data symbols and/or pilot symbols and/or zero symbols and/or dummy symbols can be selected via the frame-output matrix (12), and that the selected signal spaces (13) are highlighted in the constellation diagram (11).

6. The evaluation unit according to any one of the preceding claims,
**characterised in that**
the allocation unit (4) synchronises the at least one OFDM signal (9), **in that** various settings for timing, frequency and phase are adjusted in succession by the allocation unit (4).

7. The evaluation unit according to any one of the preceding claims,
**characterised in that,**
instead of or in addition to the frame-output unit (12), the allocation unit (4) prepares an assignment matrix (21), wherein the assignment matrix (21) images the individual signal spaces (13) onto the respective sub-carrier of the OFDM signal (9), wherein, for the individual signal spaces (13), the assignment matrix (21) contains information regarding whether these are allocated to data symbols or pilot symbols or zero symbols or dummy symbols.

8. The evaluation unit according to claim 7,
**characterised in that**
the allocation unit (4) stores the assignment matrix (21) in the at least one storage unit (3), especially as an XML file.

9. The evaluation unit according to any one of the preceding claims,
**characterised in that**
the allocation unit (4) loads an assignment matrix (21), which, for the individual signal spaces (13), contains information regarding whether these are allocated to data symbols or pilot symbols or zero symbols or dummy symbols.

10. A method for operating an evaluation unit (1) comprising a central data-processing unit (2), at least one storage unit (3) and an allocation unit (4), wherein the allocation unit (4) and the at least one storage unit (3) are connected to the central data-processing unit (2),
with the following method steps:
- loading (S₁) of at least one OFDM signal (9) from the at least one storage unit (3) by the central data-processing unit (2) and transfer of the at least one OFDM signal (9) to the allocation unit (4);
**characterised by,**
- display (S₄) of the individual signal spaces (13) of the OFDM symbols (10) of the at least one OFDM signal (9) in a constellation diagram (11) and in a frame-output matrix (12), wherein the frame-output matrix (12) images the output of the individual signal spaces (13) onto the respective sub-carrier of the OFDM signal (9), and wherein a signal space (13) which is displayed highlighted in one of the diagrams (11, 12) is displayed highlighted in the respectively other diagram (11, 12);
- allocation (S₅) of the individual signal spaces (13) to data symbols and/or pilot symbols and/or zero symbols and/or dummy symbols and allocation of a modulation type to the data symbols and/or pilot symbols;
- drawing (S₆) of a number of constellation circles (20) in the constellation diagram (11) corresponding to the selected modulation type; and
- allocation (S₉) by the allocation unit (4) of all signal spaces (13) which are disposed within the constellation circles (20) or marked, to data symbols or pilot symbols or zero symbols or dummy symbols, and highlighting of these signal spaces (13) in the frame-output matrix (12).

11. The method according to claim 10,
**characterised by**
the following further method steps:
- adjustment (S₇) of the radii of the constellation circles (20) in such a manner that the individual constellation circles (20) do not overlap and/or multiplication of the centre points of the constellation circles (20) by a first boosting factor and/or multiplication of the imaginary part and the real part of the individual signal spaces (13) by a second boosting factor in such a manner that the maximum possible number of signal spaces (13) are arranged within the constellation circles (20);
- variation (S₈) of the first boosting factor and/or the second boosting factor until the maximum possible number of signal spaces (13) are disposed approximately at the centre of the constellation circles (20).

12. The method according to claim 11,
**characterised by**
the following further method step:
- selection (S₁₀) of the signal spaces (13) in the frame-output matrix (12) which are allocated to data symbols or pilot symbols or zero symbols or dummy symbols, and highlighting of the selected signal spaces (13) in the constellation diagram (11).

13. The method according to any one of claims 10 to 12,
**characterised by**
the following further method steps:
- plotting (S₁₁) by the allocation unit (4) of an assignment matrix (21) which, for the individual signal spaces (13), contains information regarding whether this is allocated to the data symbols or pilot symbols or zero symbols or dummy symbols;
- storage (S₁₂) by the allocation unit (4) of the assignment matrix (21) in the at least one storage unit (3), especially as an XML file;
- loading (S₁₃) by the allocation unit (4) of an assignment matrix (21) which, for the individual signal spaces (13), contains information regarding whether this is allocated to data symbols or pilot symbols or zero symbols or dummy symbols.

14. A computer program with program-code means for the implementation of all of the steps according to any one of claims 10 to 13 when the program is executed on a computer or a digital signal-processor.

15. A computer software product with program-code means, especially stored on a machine-readable carrier, for the implementation of all of the steps according to any one of claims 10 to 13 when the program is executed on a computer or a digital signal processor.

## Revendications

1. Unité d'analyse (1) présentant une unité de traitement des données centrale (2), au moins une unité de stockage (3) et une unité d'attribution (4), dans laquelle l'unité d'attribution (4) et la au moins une unité de stockage (3) sont raccordées à l'unité de traitement des données centrale (2),
dans laquelle l'unité de traitement des données centrale (2) charge au moins un signal OFDM (9) depuis la au moins une unité de stockage (3) et le transmet à l'unité d'attribution (4),
**caractérisée en ce que**
l'unité d'attribution (4) représente les points d'espace de signal (13) individuels des symboles OFDM (10) du au moins un signal OFDM (9) dans un diagramme de constellation (11) et dans une matrice de performance cadrée (12), dans laquelle la matrice de performance cadrée (12) reproduit la performance des points d'espace de signal (13) individuels sur la sous-porteuse respective du signal OFDM (9), dans laquelle l'unité d'attribution (4) trace dans le diagramme de constellation (11) un nombre de cercles de constellation (20) correspondant à un type de modulation attribué, dans laquelle des points d'espace de signal (13), qui se situent à l'intérieur des cercles de constellation (20), sont représentés de façon accentuée par l'unité d'attribution (4) tant dans le diagramme de constellation (11) que dans la matrice de performance cadrée (12), de sorte qu'il soit attribuable à partir des diagrammes (11, 12) pour quels points d'espace de signal (13) il s'agit de symboles de donnée et/ou de symboles pilotes et/ou de caractères nuls et/ou de symboles fictifs et avec quel type de modulation les symboles de donnée et/ou les symboles pilotes sont modulés.

2. Unité d'analyse selon la revendication 1,
**caractérisée en ce que**
les rayons des cercles de constellation (20) sont réglables de telle sorte que les cercles de constellation (20) individuels ne se superposent pas, et/ou **en ce que** les points centraux des cercles de constellation (20) peuvent être multipliés par un premier facteur d'amplification et/ou **en ce que** la partie imaginaire et la partie réelle des points d'espace de signal (13) individuels peuvent être multipliés avec un second facteur d'amplification de telle sorte que si possible beaucoup de points d'espace de signal (13) soient agencés à l'intérieur des cercles de constellation (20).

3. Unité d'analyse selon la revendication 2,
**caractérisée en ce que**
à l'intérieur de l'unité d'attribution (4), le premier facteur d'amplification et/ou le second facteur d'amplification peut être modifié jusqu'à ce que si possible beaucoup de points d'espace de signal (13) se situent dans environ dans le point central des cercles de constellation (20).

4. Unité d'analyse selon l'une des revendications 1 à 3,
**caractérisée en ce que**
tous les points d'espace de signal (13) qui sont marqués sont attribuables par l'unité d'attribution (4) à des symboles de donnée et/ou des symboles pilotes et/ou des caractères nuls et/ou des symboles fictifs et **en ce que** les points d'espace de signal (13) sont accentués dans la matrice de performance cadrée (12).

5. Unité d'analyse selon l'une des revendications précédentes,
**caractérisée en ce que**
par la matrice de performance cadrée (12) peuvent être sélectionnés les points d'espace de signal (13) qui sont attribuables à des symboles de donnée et/ou des symboles pilotes et/ou des caractères nuls et/ou des symboles fictifs et **en ce que** les points d'espace de signal (13) sélectionnés sont accentués dans le diagramme de constellation (11).

6. Unité d'analyse selon l'une des revendications précédentes,
**caractérisée en ce que**
l'unité d'attribution (4) synchronise le au moins un signal OFDM (9) du fait que l'unité d'attribution (4) règle différents réglages les uns après les autres pour la temporisation et la fréquence et la phase.

7. Unité d'analyse selon l'une des revendications précédentes,
**caractérisée en ce que**
l'unité d'attribution (4) établit une matrice d'affectation (21) à la place ou en complément de la matrice de performance cadrée (12), dans laquelle la matrice d'affectation (21) reproduit les points d'espace de signal (13) individuels sur la sous-porteuse respective du signal OFDM (9), dans laquelle la matrice d'affectation (21) contient l'information pour les points d'espace de signal (13) individuels quant à savoir si ceux-ci sont attribués à des symboles de donnée ou à des symboles pilotes ou à des caractères nuls ou à des symboles fictifs.

8. Unité d'analyse selon la revendication 7,
**caractérisée en ce que**
l'unité d'attribution (4) stocke la matrice d'affectation (21) dans la au moins une unité de stockage (3), en particulier en tant que donnée XML.

9. Unité d'analyse selon l'une des revendications précédentes,
**caractérisée en ce que**
l'unité d'attribution (4) charge une matrice d'affectation (21) qui contient l'information pour les points d'espace de signal (13) individuels quant à savoir si ceux-ci sont attribués à des symboles de donnée ou à des symboles pilotes ou à des caractères nuls ou à des symboles fictifs.

10. Procédé pour faire fonctionner une unité d'analyse (1) présentant une unité de traitement des données centrale (2), au moins une unité de stockage (3) et une unité d'attribution (4),
dans lequel l'unité d'attribution (4) et la au moins une unité de stockage (3) sont raccordées à l'unité de traitement des données centrale (2),
avec les étapes de procédé suivantes :
- chargement (S₁) d'au moins un signal OFDM (9) depuis la au moins une unité de stockage (3) par l'unité de traitement des données centrale (2) et transmission du au moins un signal OFDM (9) à l'unité d'attribution (4),
**caractérisé par**
- la représentation (S₄) des points d'espace de signal (13) individuels des symboles OFDM (10) du au moins un signal OFDM (9) dans un diagramme de constellation (11) et dans une matrice de performance cadrée (12), dans lequel la matrice de performance cadrée (12) reproduit la performance des points d'espace de signal (13) individuels sur la sous-porteuse respective du signal OFDM (9) et dans lequel un point d'espace de signal (13) représenté de façon accentuée dans l'un des diagrammes (11, 12) est représenté de façon accentuée dans l'autre diagramme (11, 12) respectif ;
- l'attribution (S₅) des points d'espace de signal (13) à des symboles de donnée et/ou des symboles pilotes et/ou des caractères nuls et/ou des symboles fictifs, et l'attribution d'un type de modulation aux symboles de donnée et/ou aux symboles pilotes ;
- le traçage (S₆) d'un nombre de cercles de constellation (20) correspondant au type de modulation sélectionné dans le diagramme de constellation (11) ; et
- l'attribution (S₉) de tous les points d'espace de signal (13) qui se situent ou sont marqués à l'intérieur des cercles de constellation (20), par l'unité d'attribution (4) à des symboles de donnée ou des symboles pilotes ou des caractères nuls ou des symboles fictifs et l'accentuation de ces points d'espace de signal (13) dans la matrice de performance cadrée (12).

11. Procédé selon la revendication 10,
**caractérisé par**
les autres étapes de procédé suivantes :
- le réglage (S₇) des rayons des cercles de constellation (20) de telle sorte que les cercles de constellation (20) individuels ne se superposent pas et/ou la multiplication des points centraux des cercles de constellation (20) par un premier facteur d'amplification et/ou la multiplication de la partie imaginaire et de la partie réelle des points d'espace de signal (13) individuels par un second facteur d'amplification de telle sorte que si possible beaucoup de points d'espace de signal (13) soient agencés à l'intérieur des cercles de constellation (20) ;
- la modification (S₈) du premier facteur d'amplification et/ou du second facteur d'amplification jusqu'à ce que si possible beaucoup de points d'espace de signal (13) se situent dans environ dans le point central des cercles de constellation (20).

12. Procédé selon la revendication 11,
**caractérisé par**
les autres étapes de procédé suivantes :
- la sélection (S₁₀) dans la matrice de performance cadrée (12) des points d'espace de signal (13) qui sont attribués à des symboles de donnée ou des symboles pilotes ou des caractères nuls ou des symboles fictifs, et l'accentuation des points d'espace de signal (13) sélectionnés dans le diagramme de constellation (11).

13. Procédé selon l'une des revendications 10 à 12,
**caractérisé par**
les autres étapes de procédé suivantes :
l'établissement (S₁₁) par l'unité d'attribution (4) d'une matrice d'affectation (21) qui contient l'information pour les points d'espace de signal (13) individuels quant à savoir si ceux-ci sont attribués aux symboles de donnée ou aux symboles pilotes ou aux caractères nuls ou aux symboles fictifs ;
le stockage (S₁₂) de la matrice d'affectation (21) par l'unité d'attribution (4) dans la au moins une unité de stockage (3), en particulier en tant que donnée XML ;
le chargement (S₁₃) par l'unité d'attribution (4) d'une matrice d'affectation (21) qui contient l'information pour les points d'espace de signal (13) individuels quant à savoir si ceux-ci sont attribués à des symboles de donnée ou à des symboles pilotes ou à des caractères nuls ou à des symboles fictifs.

14. Programme informatique avec des moyens de code de programme pour pouvoir exécuter toutes les étapes selon l'une des revendications 10 à 13 lorsque le programme est mis en oeuvre sur un ordinateur ou un processeur de signaux numérique.

15. Produit de programme informatique avec en particulier des moyens de code de programme stockés sur un support lisible par machine pour pouvoir exécuter toutes les étapes selon l'une des revendications 10 à 13 lorsque le programme est mis en oeuvre sur un ordinateur ou un processeur de signaux numérique.
